# EUROPEAN PATENT SPECIFICATION

(11) **EP 4 362 422 B1**
(45) Date of publication and mention of the grant of the patent: **17.06.2026**
(21) Application number: 23217842.6
(22) Date of filing: 10.05.2019
(51) Int. Cl.: H04L 47/2483, H04N 21/845

(54) **NETWORK TRAFFIC IDENTIFICATION METHOD AND RELATED DEVICE**
NETZVERKEHRIDENTIFIKATIONSVERFAHREN UND ZUGEHÖRIGE VORRICHTUNG
PROCÉDÉ D'IDENTIFICATION DE TRAFIC DE RÉSEAU ET DISPOSITIF ASSOCIÉ

(30) Priority: 22.05.2018 CN 201810498713
(43) Date of publication of application: 01.05.2024
(62) Divisional of application: 19807078.1
(73) Proprietor: Huawei Technologies Co., Ltd., Shenzhen, Guangdong 518129 (CN)
(72) Inventor: SHAO, Yiyang, Shenzhen, 518129 (CN); HE, Bin, Shenzhen, 518129 (CN)
(74) Representative: Thun, Clemens

(56) References cited:
- EP-A1- 2 618 524
- EP-A1- 3 270 563
- WO-A1-2016/147148
- US-A1- 2014 219 101
- CHAN K M ET AL: "Improving adaptive HTTP streaming performance with predictive transmission and cross-layer client buffer estimation", MULTIMEDIA TOOLS AND APPLICATIONS, KLUWER ACADEMIC PUBLISHERS, BOSTON, US, vol. 75, no. 10, 19 March 2015 (2015-03-19), pages 5917 - 5937, XP035924478, ISSN: 1380-7501, [retrieved on 20150319], DOI: 10.1007/S11042-015-2556-Y
- ANSARI MOHSEN ET AL: "Parallel HTTP for Video Streaming in Wireless Networks", 2016 IEEE 24TH INTERNATIONAL SYMPOSIUM ON MODELING, ANALYSIS AND SIMULATION OF COMPUTER AND TELECOMMUNICATION SYSTEMS (MASCOTS), IEEE, 19 September 2016 (2016-09-19), pages 337 - 342, XP033018515, DOI: 10.1109/MASCOTS.2016.63

## Description

### TECHNICAL FIELD

The present invention relates to the field of network traffic identification technologies, and in particular, to a network traffic identification method and a related device.

### BACKGROUND

With the development of a mobile internet, a video has become a main medium for people's communication and entertainment, and consumers mainly demand video consumption in a high-definition, multi-screen, interactive, social, and real-time manner. Currently, online video traffic accounts for a largest proportion on the Internet. According to a recent prediction report, Internet traffic generated by online videos (IP VOD and Internet videos) will account for 82% of total Internet traffic by 2021.

A large quantity of video services bring huge profits to operators while challenging the operators' video service operation capabilities. Usually, important indicators for evaluating quality of service (Quality of Service, QoS) of an operator include bandwidth, a latency, network stability, and other related indicators, and levels of video quality of service are strongly correlated with these indicators. Therefore, it is natural for a majority of common users to evaluate network service quality of an operator based on video service quality. Currently, quality of experience (Quality of Experience, QoE) of a video service has become a de facto standard for evaluating QoS of an operator

A capability of identifying and managing video traffic is an important indicator for measuring network service quality of an operator. To better manage a network, the operator needs to accurately identify video traffic in a domain. As one of basic technologies for enhancing network controllability, network traffic classification can help researchers and operation and maintenance personnel know traffic and application distribution on a network, and allows a network operator to customize traffic transmission priorities based on information such as an application type, thereby effectively managing the network and preventing occurrence of network crimes. Currently, operators mainly rely on the network traffic classification technology and its related products for traffic identification and management. A principle of the network traffic classification technology is to present specific attributes of network traffic at different levels to an upper layer through in-depth analysis of the network traffic, where the specific attributes usually include application information, service information, a content feature, and the like.

However, in the prior art, there are an enormous quantity and numerous types of related video applications on an application market, and the video applications are generally updated frequently. Some video applications even gradually start to be encrypted. These features make great difficulty for video traffic classification. Therefore, how to provide an effective video traffic classification scheme to improve classification performance and accuracy is an issue to be urgently resolved.
The document EP 3 270 563 A1 shows a method for detecting a life adaptive bit rate stream.
The document WO 2016/147148 A1 shows a system and method for categorizing packet flow in a network.

### SUMMARY

The present invention is defined by the independent claims. Further advantageous developments are shown by the dependent claims.

Embodiments of the present invention provide a network traffic identification method and a related device, to improve network traffic identification efficiency and accuracy.

According to a first aspect, an embodiment of the present invention provides a network traffic identification method. The method may include:
determining a transmission mode corresponding to a first network session, where the first network session is a set of data packets with same triplet information in a first time period, the triplet information includes a source address of a client, a destination address of a server, and a transport layer protocol between the client and the server, and the transmission mode includes a behavior pattern of requesting the server by the client and/or a behavior pattern of responding to the client by the server; determining a feature parameter matching the transmission mode; and determining a type of the first network session based on the feature parameter of the first network session and a preset feature parameter range. In the network traffic identification method in this embodiment of the present invention, an interactive behavior pattern, corresponding to a network session, between the client and the server is first determined, a feature parameter corresponding to the network session in the determined interactive behavior pattern is then determined, and finally a type of the network session is determined based on a result of comparison between the feature parameter and a preset feature parameter range. Some feature parameters corresponding to different interactive behavior patterns between the client and the server may differ relatively greatly. Therefore, in this embodiment of the present invention, a transmission mode for a network session is first determined, a feature parameter corresponding to the transmission mode is then determined in a targeted manner, and finally a type of the network session is accurately identified. This improves network traffic identification efficiency and accuracy.

In a possible implementation, before the determining a transmission mode corresponding to a first network session, the method further includes: determining a network session that is in network traffic and that includes a preset field as the first network session. In this embodiment of the present invention, before the first network session is determined, a network session that satisfies a specific condition is selected from the network traffic as the first network session based on the condition. In this way, most network sessions that do not satisfy the condition can be quickly excluded, thereby effectively improving identification efficiency of identifying a network session of a specified type.

In a possible implementation, the first time period includes a second time period; the transmission mode includes a first transmission mode; the first network session includes a first network flow, where the first network flow is a set of data packets with same quintuple information in the second time period, and the quintuple information includes the source address and a source port of the client, the destination address and a destination port of the server, and the transport layer protocol between the client and the server; and the first transmission mode includes: in the second time period, the client initiates a request to the server for a plurality of times by using the first network flow, and the server responds to the plurality of times of requests of the client by using the first network flow. This embodiment of the present invention provides a type of classification, applied to a video traffic identification scenario, of a transmission mode for a network session. In the transmission mode, a video stream is carried by a single network flow, and the client initiates a plurality of times of requests to the server. This can be applicable to an on-demand scenario in which a long video is identified.

In a possible implementation, the feature parameter includes a first feature parameter of each of video traffic slices, and the first feature parameter includes at least one of a size of the slice, an average rate of the slice, and numerical distribution of a size of a network packet in the slice; and the preset feature parameter range includes a first video feature parameter range. The determining a type of the first network session based on the feature parameter of the first network session and a preset feature parameter range includes: slicing, in the second time period by using an uplink data packet that is in the first network flow and that is sent by the client to the server as a split point, a downlink data packet that is in the first network flow and that is sent by the server to the client, where a slice does not include the uplink data packet; determining whether the first feature parameter of each slice meets the first video feature parameter range; and if the first feature parameter of each slice meets the first video feature parameter range, determining that the first network session belongs to video traffic. This embodiment of the present invention provides a solution as follows: when it is determined that the first network session uses the foregoing first transmission mode, obtaining a feature parameter matching the first network session, comparing the feature parameter with a preset video feature parameter range, and finally determining whether the first network session belongs to video traffic.

In a possible implementation, the feature parameter includes a first feature parameter of each of the video traffic slices, and the first feature parameter includes at least one of the size of the slice, the average rate of the slice, and the numerical distribution of the size of the network packet in the slice; the preset feature parameter range includes a first video feature parameter range; and the determining a type of the first network session based on the feature parameter of the first network session and a preset feature parameter range includes: periodically detecting, in the second time period, an uplink data packet that is in the first network flow and that is sent by the client to the server; if the uplink data packet satisfies a first preset periodic feature, slicing, by using the uplink data packet as a split point, a downlink data packet that is in the first network flow and that is sent by the server to the client, where a slice does not include the uplink data packet; determining whether the first feature parameter of each slice meets the first video feature parameter range; and if the first feature parameter of each slice meets the first video feature parameter range, determining that a traffic class of the first network session is video traffic. This embodiment of the present invention provides another solution as follows: when it is determined that the first network session uses the foregoing first transmission mode, obtaining a feature parameter matching the first network session, comparing the feature parameter with a preset video feature parameter range, and finally determining whether the first network session belongs to video traffic.

In a possible implementation, the first time period includes a third time period; the transmission mode includes a second transmission mode; the first network session includes a plurality of second network flows, where each second network flow is a set of data packets with same quintuple information in the third time period, and data packets in data packet sets corresponding to different second network flows have same triplet information; and the second transmission mode includes: in the third time period, the client initiates a request to the server for a plurality of times by using the plurality of second network flows, and the server separately responds to requests corresponding to the client by using the plurality of second network flows. This embodiment of the present invention provides another type of classification, applied to a video identification scenario, of a transmission mode for a network session. In the transmission mode, a video stream is carried by a plurality of network flows, and the client initiates a request to the server for a plurality of times by using a plurality of network flows. This can be applicable to an on-demand scenario in which a long video having a high real-time requirement is identified.

The feature parameter includes a second feature parameter of each of the video traffic slices, and the second feature parameter includes at least one of the size of the slice, the average rate of the slice, and the numerical distribution of the size of the network packet in the slice; the preset feature parameter range includes a second video feature parameter range; the determining a type of the first network session based on the feature parameter of the first network session and a preset feature parameter range includes: slicing, in the third time period by respectively using an uplink data packet that is in the plurality of second network flows and that is sent by the client to the server as a split point, a downlink data packet that is in the corresponding second network flow and that is sent by the server to the client, where a slice does not include the uplink data packet; determining whether the second feature parameter of each slice of the at least one second network flow meets the second video feature parameter range; and if the second feature parameter of each slice of any one of the at least one second network flow meets the second video feature parameter range, determining that the first network session belongs to video traffic. This embodiment of the present invention provides a solution as follows: when it is determined that the first network session uses the foregoing second transmission mode, obtaining a feature parameter matching the first network session, comparing the feature parameter with a preset video feature parameter range, and finally determining whether the first network session belongs to a video traffic.

In a possible implementation, the feature parameter includes a second feature parameter of each of the video traffic slices, and the second feature parameter includes at least one of the size of the slice, the average rate of the slice, and the numerical distribution of the size of the network packet in the slice; the preset feature parameter range includes a second video feature parameter range; and the determining a type of the first network session based on the feature parameter of the first network session and a preset feature parameter range includes: periodically detecting, in the third time period, an uplink data packet that is in each of the plurality of second network flows and that is sent by the client to the server; if the uplink data packet of at least one of the plurality of second network flows satisfies a second preset periodic feature, slicing, by using the uplink data packet as a split point, a downlink data packet that is in the corresponding second network flow and that is sent by the server to the client, where a slice does not include the uplink data packet; determining whether the second feature parameter of each slice of the at least one second network flow meets the second video feature parameter range; and if the second feature parameter of each slice of any one of the at least one second network flow meets the second video feature parameter range, determining that the first network session belongs to video traffic. This embodiment of the present invention provides another solution as follows: when it is determined that the first network session uses the foregoing second transmission mode, obtaining a feature parameter matching the first network session, comparing the feature parameter with a preset video feature parameter range, and finally determining whether the first network session belongs to a video traffic.

In a possible implementation, the first time period includes a fourth time period; the transmission mode includes a third transmission mode; the first network session includes a plurality of third network flows, where each third network flow is a set of data packets with same quintuple information in the fourth time period, and data packets in data packet sets corresponding to different third network flows have same triplet information; and the third transmission mode includes: in the fourth time period, the client initiates one request to the server by using each of the plurality of third network flows, and the server separately responds to the request corresponding to the client by using each of the plurality of third network flows. This embodiment of the present invention provides still another type of classification, applied to a video identification scenario, of a transmission mode for a network session. In the transmission mode, a video stream is carried by a plurality of network flows, and the client initiates only one request to the server in each flow. This can be applicable to an on-demand scenario in which a short video having a high real-time requirement is identified.

In a possible implementation, the feature parameter includes a third feature parameter of each of the video traffic slices; the third feature parameter includes at least one of a peak rate of the slice, duration of the slice, the size of the slice, the average rate of the slice, and the numerical distribution of the size of the network packet in the slice; the preset feature parameter range includes a third video feature parameter range; and
the determining a type of the first network session based on the feature parameter of the first network session and a preset feature parameter range includes: using a downlink data packet that is in each of the plurality of third network flows and that is sent by the server to the client as a slice; determining whether the third feature parameter of each slice meets the third video feature parameter range; and if the third feature parameter of each slice meets the third video feature parameter range, determining that the first network session belongs to video traffic. This embodiment of the present invention provides a solution as follows: when it is determined that the first network session uses the foregoing third transmission mode, obtaining a feature parameter matching the first network session, comparing the feature parameter with a preset video feature parameter range, and finally determining whether the first network session belongs to a video traffic.

In a possible implementation, the first time period includes a fifth time period; the transmission mode includes a fourth transmission mode; the first network session includes a fourth network flow, and the fourth network flow is a set of data packets with same quintuple information in the fifth time period; and the fourth transmission mode includes: in the fifth time period, the client initiates one request to the server by using the fourth network flow, and the server responds to the request of the client by using the fourth network flow. This embodiment of the present invention provides still another type of classification, applied to a video identification scenario, of a transmission mode for a network session. In the transmission mode, a video stream is carried by a single network flow, and the client initiates only one request to the server. This can be applicable to an on-demand scenario in which a video is identified.

In a possible implementation, the feature parameter includes a fourth feature parameter of each of the video traffic slices, and the fourth feature parameter includes at least one of the size of the slice, the average rate of the slice, and the numerical distribution of the size of the network packet in the slice; the preset feature parameter range includes a fourth video feature parameter range; and the determining a type of the first network session based on the feature parameter of the first network session and a preset feature parameter range includes: determining a first data packet in the fourth network flow in the fifth time period, where the first data packet is a data packet whose size is less than that of a second data packet and that is in downlink data packets that are in the fourth network flow and that are sent by the server to the client, and the second data packet is a largest data packet in the fourth network flow; slicing the downlink data packets in the fourth network flow by using the first data packet as a split point, where a slice does not include the first data packet; detecting whether the fourth feature parameter of each slice meets the fourth video feature parameter range; and if the fourth feature parameter of each slice meets the fourth video feature parameter range, determining that the first network session belongs to video traffic. This embodiment of the present invention provides a solution as follows: when it is determined that the first network session uses the foregoing fourth transmission mode, obtaining a feature parameter matching the first network session, comparing the feature parameter with a preset video feature parameter range, and finally determining whether the first network session belongs to a video traffic.

In a possible implementation, the feature parameter includes a fourth feature parameter of each of the video traffic slices, and the fourth feature parameter includes at least one of the size of the slice, the average rate of the slice, and the numerical distribution of the size of the network packet in the slice; the preset feature parameter range includes a fourth video feature parameter range; the determining a type of the first network session based on the feature parameter of the first network session and a preset feature parameter range includes: determining a first data packet in the fourth network flow in the fifth time period, and periodically detecting the first data packet, where the first data packet is a data packet whose size is less than that of a second data packet and that is in downlink data packets that are in the fourth network flow and that are sent by the server to the client, and the second data packet is a largest data packet in the fourth network flow; if the first data packet satisfies a third preset periodic feature, slicing the downlink data packets in the fourth network flow by using the first data packet as a split point, where a slice does not include the first data packet; detecting whether the fourth feature parameter of each slice meets the fourth video feature parameter range; and if the fourth feature parameter of each slice meets the fourth video feature parameter range, determining that a traffic class of the first network session is video traffic. This embodiment of the present invention provides another solution as follows: when it is determined that the first network session uses the foregoing fourth transmission mode, obtaining a feature parameter matching the first network session, comparing the feature parameter with a preset video feature parameter range, and finally determining whether the first network session belongs to a video traffic.

According to a second aspect, an embodiment of the present invention provides a network traffic identification apparatus. The apparatus may include:
a first determining unit, configured to determine a transmission mode corresponding to a first network session, where the first network session is a set of data packets with same triplet information in a first time period, the triplet information includes a source address of a client, a destination address of a server, and a transport layer protocol between the client and the server, and the transmission mode includes a behavior pattern of requesting the server by the client and/or a behavior pattern of responding to the client by the server;
a matching unit, configured to determine a feature parameter matching the transmission mode; and
an identification unit, configured to determine a type of the first network session based on the feature parameter of the first network session and a preset feature parameter range.

In the network traffic identification apparatus in this embodiment of the present invention, the first determining unit first determines an interactive behavior pattern, corresponding to a network session, between the client and the server, the matching unit then determines a feature parameter corresponding to the network session in the determined interactive behavior pattern, and finally the identification unit determines a type of the network session based on a result of comparison between the feature parameter and a preset feature parameter range. Some feature parameters corresponding to different interactive behavior patterns between the client and the server may differ relatively greatly. Therefore, in this embodiment of the present invention, the network traffic identification apparatus first determines a transmission mode for a network session, then determines a feature parameter corresponding to the transmission mode in a targeted manner, and finally accurately identifies a type of the network session. This improves network traffic identification efficiency and accuracy.

In a possible implementation, the apparatus further includes:
a second determining unit, configured to: before the transmission mode corresponding to the first network session is determined, determine a network session that is in network traffic and that includes a preset field as the first network session.

In a possible implementation, the first time period includes a second time period; the transmission mode includes a first transmission mode; the first network session includes a first network flow, where the first network flow is a set of data packets with same quintuple information in the second time period, and the quintuple information includes the source address and a source port of the client, the destination address and a destination port of the server, and the transport layer protocol between the client and the server; and
the first transmission mode includes: in the second time period, the client initiates a request to the server for a plurality of times by using the first network flow, and the server responds to the plurality of times of requests of the client by using the first network flow.

In a possible implementation, the feature parameter includes a first feature parameter of each of video traffic slices, and the first feature parameter includes at least one of a size of the slice, an average rate of the slice, and numerical distribution of a size of a network packet in the slice; the preset feature parameter range includes a first video feature parameter range; and
the identification unit is specifically configured to:
slice, in the second time period by using an uplink data packet that is in the first network flow and that is sent by the client to the server as a split point, a downlink data packet that is in the first network flow and that is sent by the server to the client, where a slice does not include the uplink data packet; determine whether the first feature parameter of each slice meets the first video feature parameter range; and if the first feature parameter of each slice meets the first video feature parameter range, determine that the first network session belongs to video traffic.

In a possible implementation, the feature parameter includes a first feature parameter of each of the video traffic slices, and the first feature parameter includes at least one of the size of the slice, the average rate of the slice, and the numerical distribution of the size of the network packet in the slice; the preset feature parameter range includes a first video feature parameter range; and
the identification unit is specifically configured to:
periodically detect, in the second time period, an uplink data packet that is in the first network flow and that is sent by the client to the server; if the uplink data packet satisfies a first preset periodic feature, slice, by using the uplink data packet as a split point, a downlink data packet that is in the first network flow and that is sent by the server to the client, where a slice does not include the uplink data packet; determine whether the first feature parameter of each slice meets the first video feature parameter range; and if the first feature parameter of each slice meets the first video feature parameter range, determine that the first network session belongs to video traffic.

In a possible implementation, the first time period includes a third time period; the transmission mode includes a second transmission mode; the first network session includes a plurality of second network flows, where each second network flow is a set of data packets with same quintuple information in the third time period, and data packets in data packet sets corresponding to different second network flows have same triplet information; and
the second transmission mode includes: in the third time period, the client initiates a request to the server for a plurality of times by using the plurality of second network flows, and the server responds to the requests corresponding to the client by using the plurality of second network flows.

In a possible implementation, the feature parameter includes a second feature parameter of each of the video traffic slices, and the second feature parameter includes at least one of the size of the slice, the average rate of the slice, and the numerical distribution of the size of the network packet in the slice; the preset feature parameter range includes a second video feature parameter range; and
the identification unit is specifically configured to:
slice, in the third time period by using an uplink data packet that is in each of the plurality of second network flows and that is sent by the client to the server as a split point, a downlink data packet that is in the corresponding second network flow and that is sent by the server to the client, where a slice does not include the uplink data packet; determine whether the second feature parameter of each slice of the at least one second network flow meets the second video feature parameter range; and if the second feature parameter of each slice of any one of the at least one second network flow meets the second video feature parameter range, determine that the first network session belongs to video traffic.

In a possible implementation, the feature parameter includes a second feature parameter of each of the video traffic slices, and the second feature parameter includes at least one of the size of the slice, the average rate of the slice, and the numerical distribution of the size of the network packet in the slice; the preset feature parameter range includes a second video feature parameter range; and
the identification unit is specifically configured to:
periodically detect, in the third time period, an uplink data packet that is in each of the plurality of second network flows and that is sent by the client to the server; if the uplink data packet of at least one of the plurality of second network flows satisfies a second preset periodic feature, slice, by using the uplink data packet as a split point, a downlink data packet that is in the corresponding second network flow and that is sent by the server to the client, where a slice does not include the uplink data packet; determine whether the second feature parameter of each slice of the at least one second network flow meets the second video feature parameter range; and if the second feature parameter of each slice of any one of the at least one second network flow meets the second video feature parameter range, determine that the first network session belongs to video traffic.

In a possible implementation, the first time period includes a fourth time period; the transmission mode includes a third transmission mode; the first network session includes a plurality of third network flows, where each third network flow is a set of data packets with same quintuple information in the fourth time period, and data packets in data packet sets corresponding to different third network flows have same triplet information; and
the third transmission mode includes: in the fourth time period, the client initiates one request to the server by using each of the plurality of third network flows, and the server responds to the request corresponding to the client by using each of the plurality of third network flows.

In a possible implementation, the feature parameter includes a third feature parameter of each of the video traffic slices; the third feature parameter includes at least one of a peak rate of the slice, duration of the slice, the size of the slice, the average rate of the slice, and the numerical distribution of the size of the network packet in the slice; the preset feature parameter range includes a third video feature parameter range; and
the identification unit is specifically configured to:
use a downlink data packet that is in each of the plurality of third network flows and that is sent by the server to the client as a slice; determine whether the third feature parameter of each slice meets the third video feature parameter range; and if the third feature parameter of each slice meets the third video feature parameter range, determine that the first network session belongs to video traffic.

In a possible implementation, the first time period includes a fifth time period; the transmission mode includes a fourth transmission mode; the first network session includes a fourth network flow, and the fourth network flow is a set of data packets with same quintuple information in the fifth time period; and
the fourth transmission mode includes: in the fifth time period, the client initiates one request to the server by using the fourth network flow, and the server responds to the request of the client by using the fourth network flow.

In a possible implementation, the feature parameter includes a fourth feature parameter of each of the video traffic slices, and the fourth feature parameter includes at least one of the size of the slice, the average rate of the slice, and the numerical distribution of the size of the network packet in the slice; the preset feature parameter range includes a fourth video feature parameter range; and
the identification unit is specifically configured to:
determine a first data packet in the fourth network flow in the fifth time period, where the first data packet is a data packet whose size is less than that of a second data packet and that is in downlink data packets that are in the fourth network flow and that are sent by the server to the client, and the second data packet is a largest data packet in the fourth network flow; slice the downlink data packets in the fourth network flow by using the first data packet as a split point, where a slice does not include the first data packet; detect whether the fourth feature parameter of each slice meets the fourth video feature parameter range; and if the fourth feature parameter of each slice meets the fourth video feature parameter range, determine that the first network session belongs to video traffic.

In a possible implementation, the feature parameter includes a fourth feature parameter of each of the video traffic slices, and the fourth feature parameter includes at least one of the size of the slice, the average rate of the slice, and the numerical distribution of the size of the network packet in the slice; the preset feature parameter range includes a fourth video feature parameter range; and
the identification unit is specifically configured to:
determine a first data packet in the fourth network flow in the fifth time period, and periodically detect the first data packet, where the first data packet is a data packet whose size is less than that of a second data packet and that is in downlink data packets that are in the fourth network flow and that are sent by the server to the client, and the second data packet is a largest data packet in the fourth network flow;
if the first data packet satisfies a third preset periodic feature, slice the downlink data packets in the fourth network flow by using the first data packet as a split point, where a slice does not include the first data packet; detect whether the fourth feature parameter of each slice meets the fourth video feature parameter range; and if the fourth feature parameter of each slice meets the fourth video feature parameter range, determine that the first network session belongs to video traffic.

According to a third aspect, an embodiment of the present invention provides a network device. The network device includes a processor, where the processor is configured to support the network device in implementing a corresponding function in the network traffic identification method provided in the first aspect. The network device may further include a memory, where the memory is configured to couple with the processor, and stores a program instruction and data that are necessary for the network device. The terminal device may further include a communications interface. The communications interface is configured for communication between the network device and another device or a communications network.

According to a fourth aspect, an embodiment of the present invention provides a computer storage medium. The computer storage medium is configured to store a computer software instruction used in the processor of the network traffic identification apparatus provided in the second aspect. The computer storage medium includes a program designed for executing the foregoing aspects.

According to a fifth aspect, an embodiment of the present invention provides a computer program. The computer program includes an instruction, and when the computer program is executed by a computer, the computer is enabled to perform the procedure performed by the network traffic identification apparatus in the second aspect.

According to a sixth aspect, this application provides a chip system. The chip system includes a processor, configured to support a network device in implementing a function in the first aspect, for example, generating or processing information in the network traffic identification method. In a possible design, the chip system further includes a memory, and the memory is configured to save necessary program instructions and data of a data sending device. The chip system may include a chip, or may include a chip and another discrete device.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 is a schematic diagram of a network architecture according to an embodiment of the present invention;
FIG. 2 is a schematic diagram of a structure of a traffic monitoring device according to an embodiment of the present invention;
FIG. 3 is a schematic flowchart of a network traffic identification method according to an embodiment of the present invention;
FIG. 4 is a schematic flowchart of determining a transmission mode according to an embodiment of the present invention;
FIG. 5 is a schematic diagram of a time sequence of a first transmission mode according to an embodiment of the present invention;
FIG. 6 is a schematic diagram of a time sequence of a second transmission mode according to an embodiment of the present invention;
FIG. 7 is a schematic diagram of a time sequence of a third transmission mode according to an embodiment of the present invention;
FIG. 8 is a schematic diagram of a time sequence of a fourth transmission mode according to an embodiment of the present invention;
FIG. 9 is a schematic diagram of a structure of a network traffic identification apparatus according to an embodiment of the present invention; and
FIG. 10 is a schematic diagram of a structure of another network traffic identification apparatus according to an embodiment of the present invention.

### DESCRIPTION OF EMBODIMENTS

The following describes the embodiments of the present invention with reference to the accompanying drawings in the embodiments of the present invention.

In the specification, claims, and accompanying drawings of this application, the terms "first", "second", "third", "fourth" and so on are intended to distinguish between different objects but do not indicate a particular order. In addition, the terms "including", "having", or any other variant thereof, are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in the specification means that a particular characteristic, structure, or feature described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that the embodiments described in the specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

Some terms in this application are first described, to help persons skilled in the art have a better understanding.
(1) An internet protocol (Internet Protocol, IP) is a main protocol at a network layer in the TCP/IP protocol, and a task thereof is to transmit data only based on addresses of a source host and a destination host.
(2) A video on demand (Video on Demand, VOD) system is a system that allows a user to select, through a network, video content that the user wants to watch. After the user selects the content, the video on demand system can play the content instantly in a streaming media mode or play the content after downloading the content completely.
(3) A transport layer security (Transport Layer Security, TLS) protocol is a protocol that ensures data confidentiality between a communications application program and an Internet user.
(4) Secure shell (Secure Shell, SSH) is a security protocol created based on an application layer and a transport layer, and provides a secure transmission and use environment for a shell (Shell) on a computer.
(5) Internet protocol security (Internet Protocol Security, IPSec) is a protocol combination, and is used to protect a network transmission protocol suite (a set of some associated protocols) of the IP protocol by encrypting and authenticating an IP packet.
(6) Server name indication (Server Name Indication, SNI) is an extended TLS computer networking protocol. In this protocol, at the beginning of a handshake process, a client notifies a host name of a server that is being connected to the client.
(7) A content delivery network (Content Delivery Network, CDN) is a system in which computer networks are interconnected through the internet, and sends music, a picture, a video, an application program, and another file to each user more quickly and reliably by using a server closest to the user, to provide and transmit high-performance, scalable, and low-cost network content to the user.
(8) An over-the-top (Over-The-Top, OTT) service generally means that content or a service is constructed based on a basic telecommunications service without additional support of a network operator.
(9) An online video is generally a video watched through a network in a non-download manner, and may specifically include a video on demand and a live video.
(10) Traffic classification: A network communication packet is obtained through listening capturing, copying, and the like, and is parsed, reassembled, split, and the like; and original communication content of the network communication packet is restored, to learn a real-time status of both parties of network communication.
(11) Plaintext feature is a feature formed by a character or a digit that can be directly obtained by parsing a transmission packet, and is different from an encryption feature.
(12) Network flow: A set of data packets with a same quintet in a time period is referred to as a network flow, where the quintet includes a source IP address, a source port number, a destination IP address, a destination port number, and a transport layer protocol of both communication parties.
(13) A network session is a set of a plurality of network flows, and the plurality of network flows have a same triplet (a source address, a destination address, and a transport layer protocol).

First, a technical problem to be specifically resolved by this application is analyzed and proposed. In the prior art, a network traffic identification (using video traffic identification as an example) technology includes the following solution 1 and solution 2.

Solution 1: A traffic identification method based on an application feature may specifically include the following step 1 and step 2.

Step 1. Identify a type of an application based on an application feature, and determine whether the application may include video traffic.

Step 2. Further perform service subdivision on the application that may include video traffic, and determine whether to-be-identified traffic is video traffic.

Solution 1 is usually used in a video traffic identification scheme based on an application feature. At present, this solution is mainly applicable to identification scenarios of a non-encrypted application and an application using a standard encryption protocol. However, the following disadvantages exist.

Disadvantage 1: Application features are generated by analyzing applications one by one, resulting in high manpower costs. As described above, when an application-based video traffic identification method is used, an application feature needs to be analyzed to generate an application feature rule. Currently, application feature analysis and rule generation rely strongly on manpower, and generally include the following several steps that completely rely on manpower: capturing pure traffic of a specific application, analyzing an application format and comparing the application with another similar application to determine an application feature, and describing an application feature rule based on a specific syntax.

Disadvantage 2: Application update easily leads to a feature change, resulting in a false negative or a false positive of the to-be-identified traffic. As described above, to provide better experience for a user, a video application continually optimizes and updates a service of the video application. Therefore, the video application is generally frequently updated. Application update brings uncertainty to traffic identification. It usually takes at least one to three days from a time when the identification fails due to a change of a feature rule to a time when a feature rule is regenerated to restore an identification capability. During this period, the feature rule becomes ineffective, leading to a false negative or a false positive of the to-be-identified traffic and causing a huge economic loss to an operator. In addition, to determine an ineffective application feature rule as quickly as possible, a corresponding monitoring mechanism needs to be established to continually test rule effectiveness, causing extra overheads to a system.

Disadvantage 3: Whether some encrypted application traffic is video traffic cannot be determined by subdivision. As described above, a feature rule generated based on an application feature relies on a plaintext feature of an application. Currently, video applications are gradually transitioning to using an encryption protocol for transmission. Currently, a mainstream encryption manner is a TLS protocol. In the TLS protocol, original application layer information is encrypted, and only a part of plaintext fields used to establish a TLS connection is exposed. Fields with prominent application features are mainly a server name indication (Server Name Indication, SNI) and a certificate name (Certificate Name). Currently, identification methods for applications based on the TLS protocol all rely on this part of plaintext fields. However, for some applications that include a plurality of services, different services of the applications may have a same SNI and a same certificate name. In this case, different service types cannot be accurately subdivided, and therefore video traffic cannot be accurately identified.

Solution 2: A traffic identification method based on a behavior feature may specifically include the following step 1.

Step 1. Directly identify, based on a behavior feature of a video service, whether network traffic belongs to a video traffic. A behavior feature of a video is usually described in dimensions such as a transmission rate, an average packet length, and stream duration, an identification model is usually generated based on a heuristic rule or a machine learning algorithm. For different network services, there are specific differences in some traffic statistics, for example, an average packet length, average stream duration, and an average rate.

At present, the foregoing solution 2 is mainly applicable to an identification scenario of an application that uses a private encryption protocol, but has a plurality of disadvantages in the following:
Disadvantage 1: Most of existing behavior feature description methods rely on a full-traffic feature and are not suitable for online traffic identification services. For example, statistical quantities for describing behavior features of network traffic include average stream duration, an average rate, and the like. Statistics about full-traffic information of a network flow needs to be collected. Therefore, a result of traffic identification can be obtained only after network flow transmission ends or after network flow transmission is performed for a relatively long time period. However, in some scenarios, for an operator, video traffic identification is usually used for a service of the operator such as network optimization, and an identification result needs to be provided at an early stage of network flow transmission. Therefore, using a full-traffic feature is not suitable for operation of an online traffic identification service.

Disadvantage 2: An existing behavior feature description method cannot be used for accurately describing a behavior feature of video traffic. There are various types of video applications, including a pure video application, an embedded video application, an on-demand video, a live video, and the like. A plurality of different types of video applications are not distinguished, and a representative behavior feature of the video applications is easily ignored, resulting in inaccurate feature description. Consequently, identification accuracy is low, and an actual use requirement cannot be satisfied.

To resolve a problem that a current video traffic identification technology does not satisfy an actual service requirement to achieve an objective of accurately identifying online video traffic to improve a video service capability of an operator, by comprehensively considering disadvantages in the prior art, technical problems to be actually resolved in this application include the following several aspects:
1. Stable video traffic features (the disadvantages 1 and 3 of Solution 1). Currently, a video traffic identification scheme based on an application feature is widely used, partially resolving a problem in video traffic identification. However, extraction of each application feature rule relies strongly on manual intervention. Therefore, when an application feature rule changes, manual determining is usually required. As a result, the feature rule is not updated in a timely manner, and consequently an online traffic identification service is affected. Generally, the update of the application feature rule is approximately one week later than actual change of an application feature. During this period, dedicated personnel are required to analyze application traffic and extract a new feature rule, resulting in relatively high labor costs. Therefore, a stable video traffic feature needs to be proposed to reflect a real feature of a video service and reduce impact of application-level updating on video traffic identification.
2. Accurate determining of a video scenario (the disadvantage 2 of Solution 1 and the disadvantage 2 of Solution 2). At present, the video traffic identification scheme based on an application feature is mainly applicable to identification scenarios of a non-encrypted application and an application using a standard encryption protocol. At present, a video traffic identification solution based on a behavior feature is mainly applicable to an identification scenario for an application using a private encryption protocol. However, in an actual service, a specific type of to-be-identified traffic cannot be predicted in advance, and therefore a specific identification scheme to which the to-be-identified traffic is applicable cannot be flexibly determined. Currently, an application feature-based identification scheme is widely used in the industry. However, in an encryption scenario and some complex non-encryption scenarios, due to wide use of a content delivery network (Content Delivery Network, CDN), complex service calling logic in an application, and other reasons, it is difficult to accurately distinguish traffic of applications that include a plurality of different types of services. Therefore, a capability of accurately determining a video scenario is required to accurately reflect a feature of real video traffic to improve the video traffic identification accuracy.
3. Efficient traffic identification mechanism (the disadvantage 1 of Solution 2). An existing video traffic identification scheme based on a behavior feature mainly relies on a full-traffic feature for describing a behavior feature of network traffic, and is inapplicable to a real network service of an operator. Compared with other types of services, video traffic has relatively long stream duration, and therefore a relatively long traffic identification time can be accepted. However, for an operator, a shorter identification time is required to achieve a purpose of optimizing a video service. Therefore, an efficient video traffic identification mechanism is required to reduce a time required for video traffic identification.

In conclusion, the existing identification schemes cannot satisfy actual video traffic identification requirements of operators, severely affecting the development of video-based customized services. Therefore, the network traffic identification method provided in this application is used to resolve the foregoing technical problems.

For ease of understanding of this embodiment of the present invention, scenarios to which the network traffic identification method in this application is applied are listed by using examples below, and may include the following three scenarios.

Scenario 1: An operator is allowed to identify traffic of a specific application and generate a preferential package for the specific application.

To better promote a video service and increase operation revenue, the operator usually promotes a specific service package for the video service selectively. Common package types include a video package corresponding to an unlimited application and a video package for a specific application. The video package corresponding to an unlimited application means that: After subscribing to the package, a user does not need to pay extra traffic fees when watching an Internet video. The video package for a specific application means that: After subscribing to the package, a user does not need to pay extra traffic fees when using the specific video application. In addition, a bandwidth guarantee level of other video applications may be relatively low, to protect a network of the operator. Therefore, currently, to increase revenue in the video field, the operator needs to use a network traffic classification technology to identify and manage video traffic.

Scenario 2: A network operator is allowed to customize a traffic transmission priority based on an application type.

The operator can transmit network traffic of a specified application type based on a customized priority, to ensure QoS and QoE of the application type corresponding to the priority. For example, a user enjoys a relatively high level bandwidth guarantee service of a specified application type based on a package subscribed by the user, while a guarantee level of another type of application may be relatively low. Therefore, targeted quality control can be better performed based on a type of network traffic only after the type of the network traffic is accurately identified.

Scenario 3: Helping researchers and operation and maintenance personnel know traffic and application distribution on a network:
Distribution of videos, audio, pictures, texts, download, and other types of traffic on the network are effectively distinguished, helping the researchers and the operation and maintenance personnel know traffic and application distribution on the network, to perform data mining, for example, learn interests and hobbies of different users in different areas, and entertainment, working, learning, and life requirements.

It may be understood that the three application scenarios are merely several example implementations in this embodiment of the present invention, and the application scenarios in this embodiment of the present invention include but are not limited to the foregoing application scenarios.

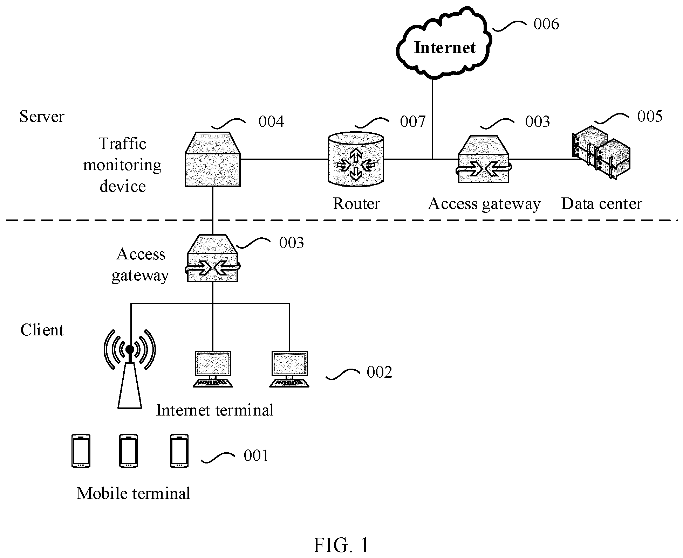

Based on the foregoing technical problem and the corresponding application scenarios in this application, for ease of understanding of this embodiment of the present invention, the following first describes one network architecture on which this embodiment of the present invention is based. Refer to FIG. 1. FIG. 1 is a schematic diagram of a network architecture according to an embodiment of the present invention. A client in this application may include a mobile terminal 001, an internet terminal 002, and a related network connection device (an access gateway 003 is used as an example in FIG. 1) in FIG. 1. The internet terminal 002 is connected to a traffic monitoring device 004 by using the access gateway 003, and the mobile terminal 001 may be connected to the traffic monitoring device 004 by using a wireless access device (for example, a wireless router or a base station) in the internet terminal 002, and the access gateway 003. A server may include the traffic monitoring device 004, a data center 005, an internet 006, and a related network connection device (an access gateway 002 and a router 007 are used as an example in FIG. 1) in FIG. 1, the traffic monitoring device 004 is connected to the internet by using the router 007, and the data center 005 is connected to the internet 006 by using the access gateway 002.

The mobile terminal 001 may be a cellular phone supporting a wireless mobile communications video service, a cordless phone, a smartphone (mobile phone), a session initiation protocol (Session Initiation Protocol, SIP) phone, a wireless local loop (Wireless Local Loop, WLL) station, a smart band, a smart wearable device, an MP3 player (Moving Picture Experts Group Audio Layer III, moving picture experts group audio layer 3), an MP4 player (Moving Picture Experts Group Audio Layer IV, moving picture experts group audio layer 4), a personal digital assistant (Personal Digital Assistant, PDA), a handheld device or a computing device with a wireless communication function, another processing device connected to a wireless modem, a vehicle-mounted device, or the like. Alternatively, the mobile terminal 001 may be a tablet computer (Pad), a computer with a wireless transmitting/receiving function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), and a wireless terminal in a smart home (smart home), or the like.

The internet terminal 002 is connected to an access gateway through a local network, the access gateway is responsible for connecting the internet terminal to the internet, and the internet terminal may be a personal computer (Personal Computer, PC), a wireless access device (for example, a wireless router or a base station), a server (Server), a workstation (Workstation), or the like.

The traffic monitoring device 004 is a monitoring device provided in this application, and is configured to obtain a traffic identification result by processing and analyzing network traffic, to implement a related embodiment of the network traffic identification method in this application. Optionally, the traffic monitoring device may further output a statistical result of traffic identification based on a user setting, or perform a specific operation such as rerouting or discarding a data packet or performing rate limiting on a network flow based on an identification result.

The internet data center (Internet Data Center, IDC) 005 is configured to place a computer system and a related computing facility, and can store and provide data of various types of services.

The network connection device may include the access gateway 002 and the router 007. The access gateway 002 is configured to send user data to a router on a backbone network, and various servers (for example, the data center 005) on the internet are also connected to the router on the backbone network by using the access gateway 002. In addition, the access gateway in this application is used as an ingress or egress of a network managed by the access gateway. The access gateway performs an operation such as protocol conversion between an internal network and an external network, and the access gateway further needs to be connected to the traffic monitoring device and is responsible for network charging, management, reporting, and the like. The router 007is configured to connect the traffic monitoring device to the Internet.

The network traffic identification method in the present invention can be applicable to a technical standard Dynamic Adaptive Streaming over HTTP (Dynamic Adaptive Streaming over HTTP, DASH) and a transmission mechanism of a dynamic bit rate adaptive technology HTTP Live Streaming (HTTP Live Streaming, HLS) that are formulated by an international standard group MPEG based on an HTTP adaptive bit rate.

It may be understood that the network architecture in FIG. 1 is merely an example implementation in this embodiment of the present invention, and the network in this embodiment of the present invention includes but is not limited to the server architecture.

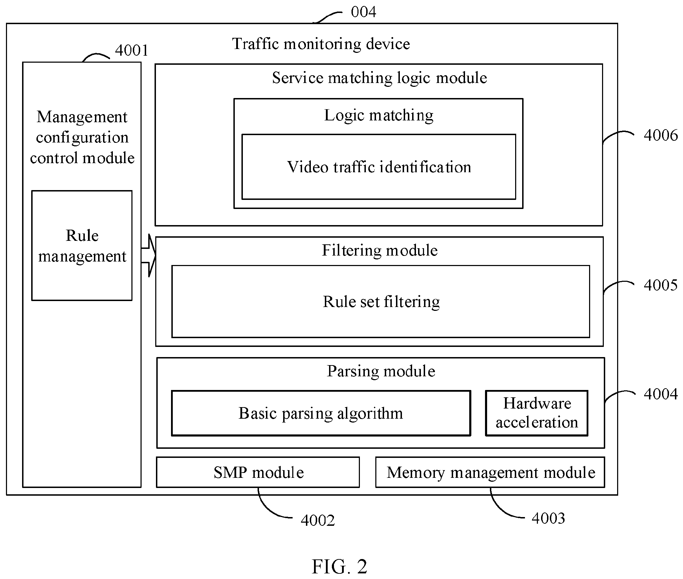

Based on the foregoing network architecture, an embodiment of the present invention provides a traffic monitoring device 004 applied to the foregoing network architecture. FIG. 2 is a schematic diagram of a structure of a traffic monitoring device according to an embodiment of the present invention. The traffic monitoring device 004 may include a management configuration control module 4001, a symmetrical multiprocessing (Symmetrical Multiprocessing, SMP) module 4002, a memory management module 4003, a parsing module 4004, a filtering module 4005, and a service matching logic module 4006.

The management configuration module 4001 is responsible for rule management. For example, a manager of a server may add, delete, modify, or view a related rule file based on a service requirement (including a network traffic identification service or a video traffic identification service in this application).

The symmetrical multiprocessing SMP module 4002 is configured to schedule a plurality of central processing units (Central Processing Unit, CPU) to perform parallel processing on concurrent network traffic on a network.

The memory management module 4003 is configured to perform life cycle management on a related network flow in a network traffic identification service, including application and release of a related variable.

The parsing module 4004 is configured to: read a data stream (including a first network session in this application) from a memory, parse the data stream based on a protocol format of a packet, and mainly process a protocol above a transport layer.

The filtering module 4005 is configured to read a rule from the management module, filter the parsed traffic by using the rule, and provide a traffic distribution function for a service identification module. In addition, a function of filtering suspicious traffic in a first phase in the network traffic identification method in this application may be implemented based on the filtering module. For example, a network session that includes a preset field in network traffic may be determined as the first network session based on the filtering module.

The service matching logic module 4006 is configured to process a related process of determining a transmission mode for the first network session and determining a type of the first network session in the network traffic identification method in this application. Specifically, behavior identification (namely, transmission mode identification), feature identification, content identification, and the like may be included. The first network session in different cases may be corresponding to different identification results. Therefore, the service matching logic module further needs to provide a status automaton to determine specific matching results respectively corresponding to cases in which different rules are hit.

It can be understood that, the structure of the traffic monitoring device in FIG. 2 is merely an example implementation in this embodiment of the present invention. The structure of the traffic monitoring device in this embodiment of the present invention includes but is not limited to the foregoing structure.

Based on the network architecture provided in FIG. 1 and the structure of the traffic monitoring device provided in FIG. 2, with reference to the network traffic identification method provided in this application, the technical problems proposed in this application is specifically analyzed and resolved.

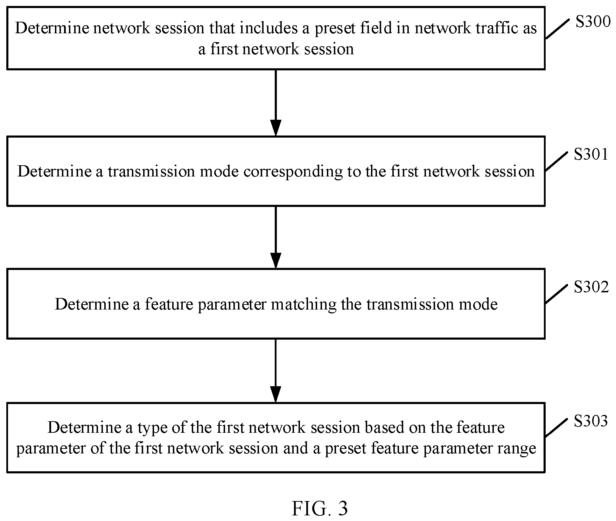

FIG. 3 is a schematic flowchart of a network traffic identification method according to an embodiment of the present invention. The method may be applied to the network architecture shown in FIG. 1, and the traffic monitoring device 004 in the network architecture may be configured to support and perform steps S301 to S305 in a method procedure shown in FIG. 3. The following provides a description from a perspective of a traffic monitoring device of a server with reference to FIG. 3. The method may include the following steps S301 to S303, and optionally may further include a step S300.

Step S301: Determine a transmission mode corresponding to a first network session.

Specifically, the first network session is a set of data packets with same triplet information in a first time period, where the triplet information includes a source address of a client, a destination address of a server, and a transport layer protocol between the client and the server, and the data packet set may include an uplink data packet and a downlink data packet. To be specific, a set of uplink/downlink data packets with a same source address of the client, a same destination address of the server, and a same transmission protocol between the client and the server in a continuous time period is used as the first network session. The transmission mode includes a behavior pattern of requesting the server by the client and/or a behavior pattern of responding to the client by the server. The requesting behavior pattern may include a quantity of times the client requests the server, a time point at which the client requests the server, and whether the client requests the server periodically. The responding behavior pattern may include returning, by the server, a network traffic bearing manner to the client, in other words, whether network traffic is carried by a plurality of network flows or a single network flow.

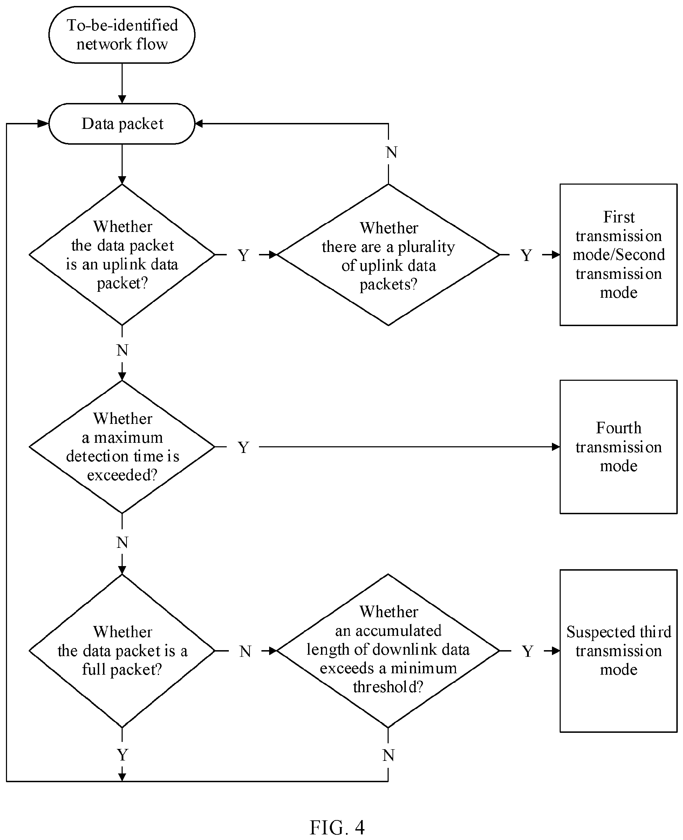

For how the traffic monitoring device specifically determines the requesting behavior pattern and/or the responding behavior pattern corresponding to the first network session, refer to FIG. 4. FIG. 4 is a schematic flowchart of determining a transmission mode according to an embodiment of the present invention. The traffic monitoring device 004 may determine, by using the service matching logic module 4006, a transmission mode corresponding to a network flow. Data packets in the network flow successively arrive at the traffic monitoring device 004 in a time sequence, and the traffic monitoring device 004 cannot store the data packets of network traffic. Therefore, a transmission mode is determined in a streaming manner.

For a network flow whose transmission mode is to be determined, when a data packet arrives at the traffic monitoring device 004, whether the data packet is an uplink data packet is first determined. If the current data packet is an uplink data packet and a plurality of uplink data packets have arrived, it can be determined that a behavior pattern of the current network flow includes a behavior of the client initiates a plurality of times of requests to the server (for example, a first transmission mode or a second transmission mode described below). For example, in an application scenario of video traffic, an uplink data packet is generally a data packet about a request initiated by the client.

If a current data packet is an uplink data packet, and only the current data packet is an uplink data packet, a transmission mode is to be determined, and a subsequent data packet continues to be observed. If a data packet subsequently observed is not an uplink data packet, but is a downlink data packet, and if an allowable maximum detection time (for example, a second time period, a third time period, a fourth time period, or a fifth time period in this application) is exceeded currently, it is determined that a behavior pattern of a current network flow includes a behavior of initiating, by the client, only one request to the server (for example, a fourth transmission mode described below). Further, if a current data packet is a downlink data packet and is a non-full packet, it is further determined whether a current accumulated length of downlink data packets exceeds a preset threshold, and if the accumulated length of downlink data packets that arrive exceeds the preset threshold, it can be determined that a behavior pattern of a current network flow includes a behavior of initiating, by the client, only one request to the server (for example, a third transmission mode or the fourth transmission mode described below).

It should be noted that, a main difference between a non-full packet and a full packet in a physical meaning is locations of the packets in a network flow. In a network, there is a maximum upper limit for a size of a single data packet that is allowed to be transmitted on the network, namely, a maximum transmission unit. Therefore, a data block that exceeds the limit is divided into a plurality of data packets for performing transmission together. For example, if the maximum transmission unit is limited to 1000 bytes, during transmission of a data block of 5600 bytes, five 1000-byte data packets and one 600-byte data packet need to be used. The 600-byte data packet herein is a non-full packet, and a physical meaning of the 600-byte data packet is an end of transmission content. Therefore, in this application, a non-full packet is used as a splitting boundary for slicing.

In the foregoing example procedure, it should be noted that, because detection of a transmission mode for a network flow-level (with same quintuple information) is described in the procedure, a network flow in the first transmission mode and a network flow in the second transmission mode cannot be distinguished, and a suspected third transmission mode cannot be determined either. At a network session (with same triplet information) level, if a same network session includes a plurality of network flows in the suspected first/second transmission mode, it is determined that a used transmission mode is the second transmission mode; if only one network flow in the suspected first/second transmission mode is included, it is determined that a used transmission mode is the first transmission mode; if a same network session includes a plurality of network flows in the suspected third transmission mode, it is determined that a used transmission mode is the third transmission mode; if only one network flow in the suspected third transmission mode is included, when a time of an entire detection process exceeds the maximum detection time (for example, the second time period, the third time period, the fourth time period, or the fifth time period in this application), it is determined that a used transmission mode is the fourth transmission mode.

Step S302: Determine a feature parameter matching the transmission mode.

Specifically, in this embodiment of the present invention, different more obvious feature parameters are matched based on characteristics of different transmission modes, to more accurately identify a class of network traffic in a corresponding transmission mode. It can be understood that, the feature parameter may be a set including a plurality of parameters, or may be a set formed by a plurality of parameter sets. This is not specifically limited in this embodiment of the present invention, provided that the parameter can reflect a feature of a corresponding video type in a corresponding transmission mode.

Step S303: Determine a type of the first network session based on the feature parameter of the first network session and a preset feature parameter range.

Specifically, the traffic monitoring device calculates the feature parameter matching the transmission mode for the first network session, and compares the calculated feature parameter with a preset feature parameter range, to finally determine the type of the first network session. The preset feature parameter range may be a set including a plurality of preset feature parameter ranges, or may be in a list form or may be a mapping relationship table, or the like. This is not specifically limited in this embodiment of the present invention.

Optionally, when steps S301 to S303 in the method are applied to video traffic identification, there are some fixed modes in a video playback request and response process. Therefore, in the behavior pattern of requesting the server by the client and/or the behavior pattern of responding to the client by the server, for example, for a movie on demand, a user may usually click a play button only once. However, due to an existing online video playback mechanism, actually, a background of the client may periodically request a video slice from the server, in other words, the client initiates a request to the server for a plurality of times, while the server may feed back a video data packet to the client for a plurality of times in a manner of a single network flow or a plurality of network flows. For a live video, a user may initiate one request to the server only once by using the client. Considering live broadcast fluency, the server usually feeds back video data to the client by using a single network flow. For a small video, a user may continuously click to watch a plurality of small videos in a very short time period. Therefore, the user initiates only one request to the server through each network flow. Therefore, in a time period, there are a plurality of times of requests for a plurality of small videos, while the server feeds back different requests by using a plurality of corresponding network flows. Therefore, after a transmission mode corresponding to a video is determined, whether the network session belongs video traffic is identified based on a specific feature of a video network flow in the transmission mode, thereby greatly improving identification efficiency and accuracy.

Optionally, before the step S301, the method may further include the following step S304:
Step S304: Determine a network session that is in network traffic and that includes a preset field as the first network session.

Specifically, before identifying the network session, the traffic monitoring device may first determine network traffic including the preset field in the network traffic as an object that needs to be identified. To be specific, before the transmission mode for the first network session is determined, a suspicious object that satisfies a specific condition is first selected from all network sessions, to narrow a determining range of the transmission mode for the network session. Optionally, the preset field in this embodiment of the present invention is a plaintext field. With reference to an application scenario 1 proposed in this application, assuming that a preferential package of an operator is a traffic-free VIP package for iQIYI, the preset field in the step S300 may include iqiyi.com. It is first determined that the network traffic belongs to the iQIYI application. Further, to narrow a range of the first network session to the video traffic, whether a preset field in a video file format, for example, keywords such as videos, mp4, avi, and ts, is included may be further verified. It should be noted that when the network traffic uses an application of a standard encryption protocol (which is mainly a TLS encryption protocol), an application type of the traffic and whether a used service is a video service can be determined by detecting a server name indication (Server Name Indication, SNI) field or a common name CommonName field that exists in the TLS protocol. For example, it can be determined, based on googlevideo included in a value of the SNI field in the TLS protocol, that the traffic belongs to a Youtube application.

The step in this method may be used to match a video plaintext feature rule, and video plaintext feature rule matching may be performed based on a feature matching function of an existing apparatus, to add a video-related plaintext feature rule. It should be noted herein that the plaintext feature rule herein is irrelevant to an application. To be specific, the plaintext feature rule does not include an application-level feature rule, and matches only a rule related to a video feature. The plaintext feature rule is to select traffic that cannot be subdivided into video traffic and unknown traffic.

This embodiment of the present invention is applicable to a video traffic identification mechanism of an online traffic identification service of an operator. A layer-by-layer filtering mechanism is established. First, a range of to-be-identified traffic is narrowed through determining of suspicious traffic, to reduce calculation workload of a subsequent transmission mode division and behavior feature matching phase, thereby greatly improving the online traffic identification and matching efficiency. In addition, most non-video traffic in a subsequent feature matching process is filtered out, improving the accuracy of identifying online video traffic. Then, a video behavior pattern is accurately located through transmission mode matching. Finally, video traffic is identified based on a feature corresponding to the behavior pattern. This further improves identification efficiency and accuracy of online video traffic.

In the step S304, a specific manner of determining a type of the first network session based on the feature parameter of the first network session and a preset feature parameter range varies with a determining result of the transmission mode for the network session. Through in-depth analysis of video applications, in this embodiment of the present invention, the video applications are classified based on behavior patterns, behavior features of various video applications are analyzed, and corresponding identification schemes are proposed. A main core point of video traffic identification is to exclude an uplink data packet to slice and divide a downlink data packet, because usually, an uplink data packet sent by the client to the server is a video request, but a downlink data packet is probably a video data packet. Optionally, dimensions for dividing video traffic based on an interactive behavior between the client and the server includes: whether downlink transmission is performed across network flows, and whether uplink transmission is performed through one request or a plurality of times of requests. Any combination of the foregoing two dimensions forms the following four video transmission behavior patterns:
1. First transmission mode: A video stream is carried by a single network flow, and the client initiates a request to the server for a plurality of times.
   (1) First transmission mode and a feature parameter matching the first transmission mode

The first transmission mode is specifically as follows: The first network session includes a first network flow carried by a single network flow. In the second time period, the client initiates a request to the server for a plurality of times by using the first network flow, and the server responds to the plurality of times of requests of the client by using the first network flow. The first time period includes the second time period, in other words, the second time period may be equal to the first time period, or may be any time period in the first time period. The first network flow is data packets with same quintuple information in the second time period, and the quintuple information includes the source address and a source port of the client, the destination address and a destination port of the server, and the transport layer protocol between the client and the server. Optionally, the second time period in this embodiment of the present invention is an initial time period in the first time period. For example, the first time period is 00:00:00 to 00:15:00, and the second time period is 00:00:00 to 00:00:30.

The feature parameter matching the first transmission mode includes a first feature parameter of each of the video traffic slices, and the first feature parameter includes at least one of the size of the slice, the average rate of the slice, and the numerical distribution of the size of the network packet in the slice; and the preset feature parameter range includes a first video feature parameter range. To be specific, when this embodiment of the present invention is applied to a video traffic identification scenario, all corresponding feature parameters are also video-related feature parameters.

(2) After the first transmission mode is determined, a type of the first network session is determined.

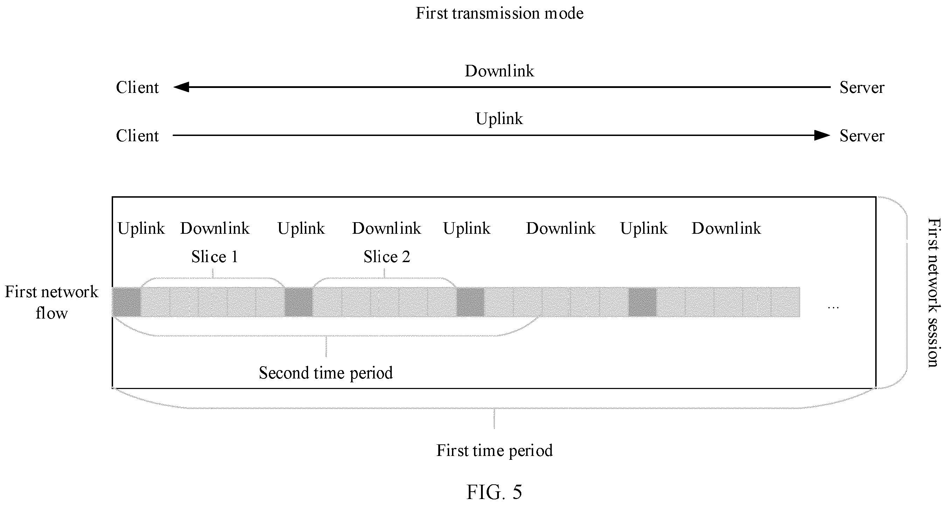

FIG. 5 is a schematic diagram of a time sequence of a first transmission mode according to an embodiment of the present invention. As shown in FIG. 5, details are as follows.
① Optionally, in the second time period, an uplink data packet (a dark gray part in FIG. 5) that is in the first network flow and that is sent by the client to the server is periodically detected. For example, detection is performed once every 2s. The uplink data packet is data about a request initiated by a user to the server by using the client. For example, the request may be a video slice playback request periodically sent by the client to the server in a background. Currently, video service providers widely use an adaptive bit rate (Adaptive Bit Rate, ABR) technology to transmit video content. Video content viewed by a user is not used as a complete file, but is successively transmitted to a user side in a form of a video slice. A video slice may be requested by the user side or pushed by the server. In a same video session, video content duration corresponding to all video slices is generally the same. On a premise that a network status is relatively stable, network traffic for transmitting all the video slices is basically similar, and a characteristic of the network traffic is periodicity. Therefore, in this embodiment of the present invention, periodic detection is used as a pre-processing means to filter a network flow that enters a detection phase. A detection principle related to periodic detection in the following is the same as that described above, and details are not described again.
② If the uplink data packet satisfies a first preset periodic feature, in other words, the uplink data packet is periodically sent, a downlink data packet that is in the first network flow and that is sent by the server to the client is sliced by using the uplink data packet as a split point, where a slice does not include the uplink data packet. The uplink data packet is probably data about a request rather than video traffic. Therefore, by determining the downlink data packet, whether the network session belongs to video traffic can be more quickly and efficiently determined. For example, after the slicing, a slice 1 and a slice 2 in FIG. 5 are obtained. The downlink data packet is data fed back by the server to the client by using the first network flow. For example, the data may be user-demand video data. It should be noted that, for the foregoing solution in which slicing is performed by using the uplink data packet satisfying the first preset periodic feature as a split point, optionally, this embodiment of the present invention further provides a solution in which no detection is performed on the uplink data packet, in other words, slicing is directly performed by using the uplink data packet as a split point. For example, in the second time period, a downlink data packet that is in the first network flow and that is sent by the server to the client is sliced by using an uplink data packet that is in the first network flow and that is sent by the client to the server as a split point, where a slice does not include the uplink data packet. This is not specifically limited in this application.
③ Whether the first feature parameter of each slice meets the first video feature parameter range is determined. To be specific, whether at least one (in other words, it may be one or a combination of the following, and this is not specifically limited in this embodiment of the present invention) of {a slice size, an average slice rate, and a value of a size of a network packet in a slice} of each of the slice 1 and the slice 2 meets the first video feature parameter range. The first feature parameter and the first video feature parameter range may be a behavior feature rule automatically generated by using an algorithm and with reference to and based on a behavior feature description method established in a video transmission mode, for example, generated according to a machine learning algorithm or obtained through calculation according to a preset artificial algorithm. This is not specifically limited in this embodiment of the present invention.
   Optionally, because there is a time sequence between the slice 1 and the slice 2, first feature parameters of all slices may be the same or may be different. Correspondingly, a feature parameter range included in the first video feature parameter range may have only one range or may have different ranges for different network slices. This is not specifically limited in this embodiment of the present invention. For a correspondence between a slice in each of a second transmission mode, a third transmission mode, and a fourth transmission mode that are described subsequently, the first feature parameter, and the first video feature parameter range, refer to the foregoing descriptions. Details are not described again subsequently.
④ If the first feature parameter of each slice meets the first video feature parameter range, it is determined that the first network session belongs to video traffic. To be specific, whether the first network session belongs to video traffic can be determined only when each slice satisfies a corresponding part in the first video feature parameter range.

In conclusion, in the first transmission mode, after continuously receiving packets for a time period, the traffic monitoring device periodically detects an uplink data packet. If the uplink data packet has significant periodicity, the uplink data packet is used as a split point for slicing a downlink data packet; whether a statistical feature of each slice satisfies a video characteristic is detected, and finally whether the network session belongs to video traffic is determined.

2. Second transmission mode: A video stream is carried by a plurality of network flows, and the client initiates a request to the server for a plurality of times.
(1) Second transmission mode and a feature parameter matching the second transmission mode

The second transmission mode is specifically as follows: The first network session includes a plurality of second network flows, and in the third time period, the client initiates a request to the server for a plurality of times by using the plurality of second network flows, and the server responds to the requests corresponding to the client by using the plurality of second network flows. The first time period includes the third time period, in other words, the third time period may be equal to the first time period, or may be any time period in the first time period. Each second network flow is a set of data packets with same quintuple information in the third time period, and data packets in data packet sets corresponding to different second network flows have same triplet information. Optionally, the third time period in this embodiment of the present invention is an initial time period in the first time period. For example, the first time period is 00:00:00 to 00:30:00, and the third time period is 00:00:00 to 00:00:50.

The feature parameter matching the second transmission mode includes a second feature parameter of each of the video traffic slices, and the second feature parameter includes at least one of a size of the slice, an average rate of the slice, and numerical distribution of a size of a network packet in the slice; and the preset feature parameter range includes a second video feature parameter range.

(2) After the second transmission mode is determined, a type of the first network session is determined.

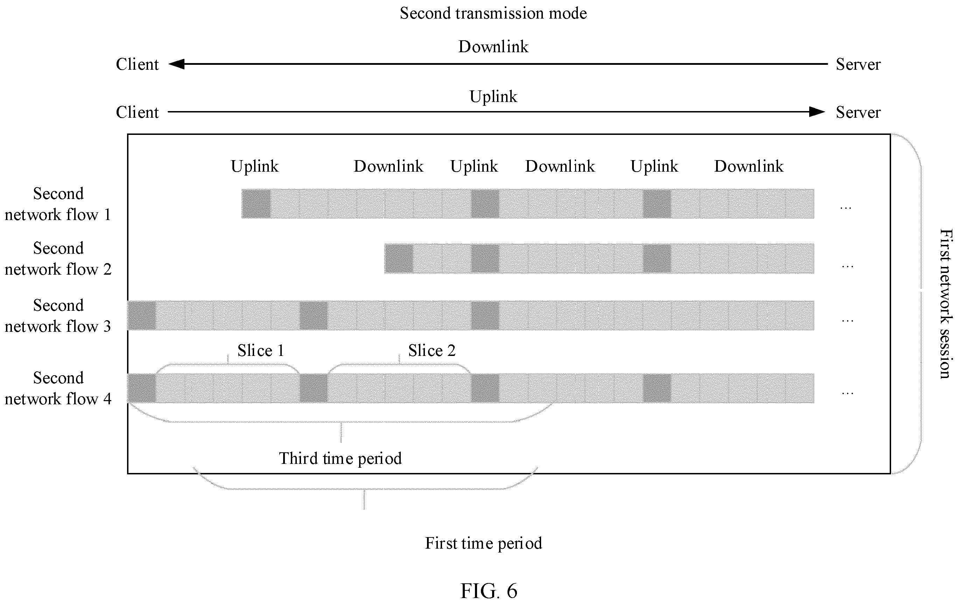

FIG. 6 is a schematic diagram of a time sequence of a second transmission mode according to an embodiment of the present invention. As shown in FIG. 6, details are as follows.
① In the third time period, an uplink data packet (a dark gray part in FIG. 6) that is in each of the plurality of second network flows and that is sent by the client to the server is periodically detected. The uplink data packet is data about a plurality of times of requests initiated by a user to the server by using the client. For example, the request may be a high-definition video on demand request. It should be noted that requests corresponding to the plurality of second network flows may be initiated at a same moment, or may be initiated at different moments. As shown in FIG. 6, only requests corresponding to second network flows 3 and 4 are initiated at a same moment, and either of requests corresponding to second network flows 1 and 2 is initiated at a different moment as that corresponding to the second network flows 3 and 4. Therefore, in a period in which the traffic monitoring device detects the plurality of second network flows, detection may actually be started at different moments. To be specific, detection is started at a moment at which a request is actually initiated based on each second network flow.
② If the uplink data packet of at least one of the plurality of second network flows satisfies a second preset periodic feature, a downlink data packet that is in the corresponding second network flow and that is sent by the server to the client is sliced by using the uplink data packet as a split point, where a slice does not include the uplink data packet. The uplink data packet is probably data about a request rather than video traffic. Therefore, by determining the downlink data packet, whether the network session belongs to video traffic can be more quickly and efficiently determined. For example, for the four second network flows in FIG. 6, if it is detected that only the second network flow 4 satisfies the second preset periodic characteristic, only a downlink data packet in the second network flow 4 is sliced, and after the slicing, a slice 1 and a slice 2 in FIG. 6 are obtained. The downlink data packet is data fed back by the server to the client by using the second network flow 4. For example, the data may be user-demand high-definition video data. It should be noted that the other second network flows 1, 2, and 3 that do not satisfy the condition may be other related service information, such as bullet screen data, an advertisement, and a chat window, of the second network flow that satisfies the condition. It should be noted that, for the foregoing solution in which slicing is performed by using the uplink data packet satisfying the second preset periodic feature as a split point, optionally, this embodiment of the present invention further provides a solution in which no detection is performed on the uplink data packet, in other words, slicing is directly performed by using the uplink data packet as a split point. For example, in the third time period, by using an uplink data packet that is in each of the plurality of second network flows and that is sent by the client to the server as a split point, a downlink data packet that is in the corresponding second network flow and that is sent by the server to the client is sliced, where a slice does not include the uplink data packet. This is not specifically limited in this embodiment of the present invention.
③ It is determined whether the second feature parameter of each slice of the at least one second network flow meets the second video feature parameter range. As shown in FIG. 6, it is determined whether both the slice 1 and the slice 2 in the second network flow 4 meet the second video feature parameter range.
④ If the second feature parameter of each slice of any one of the at least one second network flow meets the second video feature parameter range, it is determined that the first network session belongs to video traffic. If it is determined that both the slice 1 and the slice 2 in the second network flow 4 meet the second video feature parameter range, it is determined that the first network session belongs to video traffic. It can be understood that when the plurality of second network flows all satisfy the foregoing condition, if a second network flow that satisfies the condition is determined earliest, it can be determined that the first network session belongs to video traffic, without further determining.

It should be noted that, to improve the efficiency of the traffic monitoring device, after any second network flow in the first network session is identified as video traffic, a procedure for identifying the first network session may be terminated, to reduce network overheads.

3. Third transmission mode: A video stream is carried by a plurality of network flows, and the client initiates only one request to the server in each stream.
(1) Third transmission mode and a feature parameter matching the third transmission mode

The third transmission mode is specifically as follows: The first network session includes a plurality of third network flows, and in the fourth time period, the client initiates one request to the server by using each of the plurality of third network flows, and the server responds to the request corresponding to the client by using each of the plurality of third network flows. The first time period includes the fourth time period, in other words, the fourth time period may be equal to the first time period, or may be any time period in the first time period. Each third network flow is a set of data packets with same quintuple information in the fourth time period, and data packets in data packet sets corresponding to different third network flows have same triplet information. Optionally, the fourth time period in this embodiment of the present invention is an initial time period in the first time period. For example, the first time period is 00:00:00 to 00:05:00, and the fourth time period is 00:00:00 to 00:00:20.

The feature parameter matching the third transmission mode includes a third feature parameter of each of the video traffic slices, the third feature parameter includes at least one of a peak rate of the slice, duration of the slice, the size of the slice, the average rate of the slice, and the numerical distribution of the size of the network packet in the slice; and the preset feature parameter range includes a third video feature parameter range.

(2) After the third transmission mode is determined, a type of the first network session is determined.

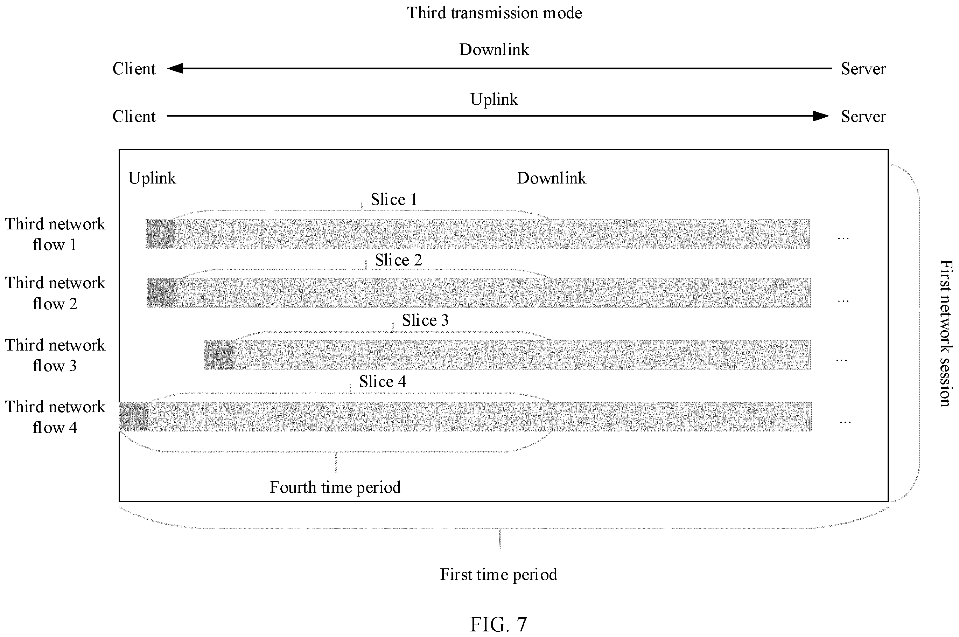

FIG. 7 is a schematic diagram of a time sequence of a third transmission mode according to an embodiment of the present invention. As shown in FIG. 7, details are as follows.
① A downlink data packet that is in each of the plurality of third network flows and that is sent by the server to the client is used as a slice, where a slice does not include an uplink data packet. The uplink data packet is probably data about a request rather than video traffic. Therefore, by determining the downlink data packet, whether the network session belongs to video traffic can be more quickly and efficiently determined. For example, obtained slices include a slice 1, a slice 2, a slice 3, and a slice 4 in FIG. 7.
② It is determined whether the third feature parameter of each slice meets the third video feature parameter range. To be specific, it is determined whether third network feature parameters respectively corresponding to the slice 1, the slice 2, the slice 3, and the slice 4 meet the third video feature parameter range of the slice 1, the slice 2, the slice 3, and the slice 4.
③ If the third feature parameter of each slice meets the third video feature parameter range, it is determined that the first network session belongs to video traffic. To be specific, it can be determined that the first network session belongs to video traffic, only when slice 1, the slice 2, the slice 3, and the slice 4 all satisfy the condition.

4. Fourth transmission mode: A video stream is carried by a single network flow, and the client initiates only one request to the server.
(1) After the fourth transmission mode is determined, a type of the first network session is determined.

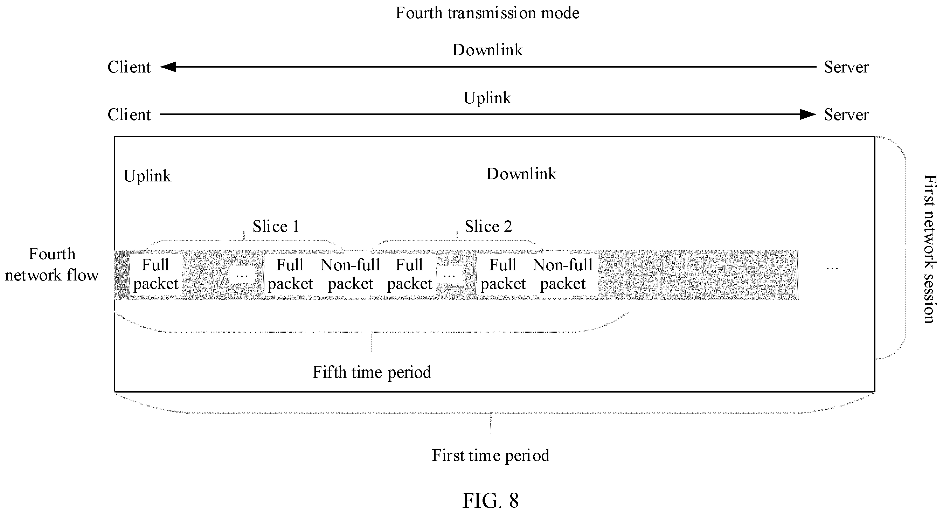

The fourth transmission mode is specifically as follows: The first network session includes a fourth network flow, and in the fifth time period, the client initiates one request to the server by using the fourth network flow, for example, a dark gray part in FIG. 8, and the server may respond to the request of the client by using the fourth network flow. For example, the server may feed back live video data fed to the client. The first time period includes the fifth time period, and the fourth network flow is a set of data packets with same quintuple information in the fifth time period.

The feature parameter matching the fourth transmission mode includes a fourth feature parameter of each of the video traffic slices, and the fourth feature parameter includes at least one of the size of the slice, the average rate of the slice, and the numerical distribution of the size of the network packet in the slice; and the preset feature parameter range includes a fourth video feature parameter range.

(2) After it is determined that the transmission mode is the fourth transmission mode, a type of the first network session is determined.

FIG. 8 is a schematic diagram of a time sequence of a fourth transmission mode according to an embodiment of the present invention. As shown in FIG. 8, details are as follows.
① In the fifth time period, a first data packet in the fourth network flow is determined, and the first data packet is periodically detected, where the first data packet is a data packet whose size is less than that of a second data packet and that is in downlink data packets that are in the fourth network flow and that are sent by the server to the client, and the second data packet is a largest data packet in the fourth network flow. For example, if the first data packet is a white part in the fourth network flow in FIG. 8, in other words, the first data packet is a non-full packet, the second data packet is a full packet, namely, a light gray part in FIG. 8. A full packet means that a size of a current data packet reaches a maximum volume of data that can be carried by a network link corresponding to the network flow. A non-full packet is a data packet whose size does not reach the maximum data volume. Generally, a physical meaning of the non-full packet is an end of transmission content. Therefore, a non-full packet may be used as a splitting boundary of a slice.
② If the first data packet satisfies a third preset periodic feature, the downlink data packets in the fourth network flow is sliced by using the first data packet as a split point, to obtain downlink video traffic that may be sent by the server to the client. A slice does not include the uplink data packet. The uplink data packet is probably data about a request rather than video traffic. Therefore, by determining the downlink data packet, whether the network session belongs to video traffic can be more quickly and efficiently determined. It should be noted that, for the foregoing solution in which slicing is performed by using the uplink data packet satisfying the third preset periodic feature as a split point, optionally, this embodiment of the present invention further provides a solution in which no detection is performed on the uplink data packet, in other words, slicing is directly performed by using the uplink data packet as a split point. For example, in the fifth time period, a first data packet in the fourth network flow is determined, where the first data packet is a data packet whose size is less than that of a second data packet and that is in downlink data packets that are in the fourth network flow and that are sent by the server to the client, and the second data packet is a largest data packet in the fourth network flow; and the downlink data packets in the fourth network flow is sliced by using the first data packet as a split point, where a slice does not include the first data packet.
③ It is detected whether the fourth feature parameter of each slice meets the fourth video feature parameter range.
④ If the fourth feature parameter of each slice meets the fourth video feature parameter range, it is determined that the first network session belongs to video traffic.

In conclusion, in the foregoing fourth transmission mode, after continuously receiving packets for a time period, the traffic monitoring device determines a size of a full packet on a transmission link corresponding to the network flow, selects a downlink non-full packet, and periodically detects the downlink non-full packet. If the downlink non-full packet has significant periodicity, the downlink data packet is sliced based on a time of the downlink non-full packet, and whether a statistical feature of the slice and the entire network flow satisfies a video characteristic is detected.

According to the identification schemes corresponding to the foregoing four transmission modes, classification modes of transmission modes in different video scenarios are clearly decoupled. By deeply analyzing characteristics of mainstream video applications, including a video protocol, a video type, and the like, a transmission mode difference between different video scenarios is proposed. Video applications are further subdivided based on the difference, so that video behavior characteristics in each scenario are more obvious. Compared with the prior art, an improvement in this embodiment of the present invention is reflected in aspects of an identification process and an identification rule.

For the foregoing three technical problems to be actually resolved in this application, in this embodiment, relatively stable video traffic features of video traffic in different transmission modes are analyzed, and these features are not affected by application update or a change of an application feature. To be specific, an interactive behavior mode between the client and the server of a video application in different transmission modes basically does not change. Therefore, stable video traffic features can be formed.

In this embodiment, in an encryption scenario and some complex non-encryption scenarios, an internal encrypted part of to-be-identified traffic does not need to be identified, and a video scenario can be accurately determined only based on a macroscopic interaction behavior between the client and the server.

In this embodiment, with reference to identification of a transmission mode and a feature parameter in the transmission mode, video traffic can be identified more quickly and accurately, in other words, an efficient traffic identification mechanism can be provided.

In conclusion, this application overcomes disadvantages in the prior art, for example, applications are analyzed one by one, an application feature easily changes, some scenarios cannot be subdivided, it is inapplicable to an online traffic identification service, and identification is performed inaccurately.

It should be noted that, in this application, relatively high video traffic identification accuracy can be achieved in the following cases to resolve a problem that a video scenario cannot be accurately identified: a proprietary protocol is used to transmit a video stream; an encryption protocol is used to transmit a video stream; an application uses a plaintext protocol, but involves a plurality of scenarios; and it is difficult to distinguish cases in which feature information of a video stream and a single network flow is insufficient.

In this application, a response speed can be increased and manpower analysis costs can be reduced in the following cases: A video application is frequently updated, and an application feature changes obviously; and there are a large quantity of to-be-identified applications, and only a video scenario needs to be identified.

The network traffic identification method in this application can be applied to a unified packet gateway UGW related product. For example, the method is applied to a UGW to support an operator in promoting a video-related charging package, or applied to a UGW product to refine QoE/QoS of video traffic.

It should be noted that, in a high-speed environment of a backbone core network, there is a relatively great limitation on a quantity of packets required for traffic identification. Therefore, during the description in this embodiment of the present invention, a full-traffic feature is not used, instead, some features are selectively captured at an early stage of network flow transmission according to characteristics of different transmission modes. However, if a hardware technology is improved or some service scenarios suitable for full-traffic analysis can support this full-traffic feature learning manner, this application can be naturally extended to such a traffic identification environment, and a core of identification thereof still falls within the protection scope of this application.

It should be further noted that, the network traffic identification method in this application not only can be applied to a charging and policy control scenario of an operator, but also can be applied to a video key quality indicator (Key Quality Indicators, KQI) scenario. Because features selected in this application are similar to some features in the video KQI scenario, based on this application, further expansion is performed to implement customized service logic with reference to a service requirement of the video KQI scenario. More widely, the solution provided in this application may be applicable to any scenario in which video traffic needs to be identified.

The foregoing describes in detail the method in the embodiments of the present invention, and the following provides a related apparatus in embodiments of the present invention.

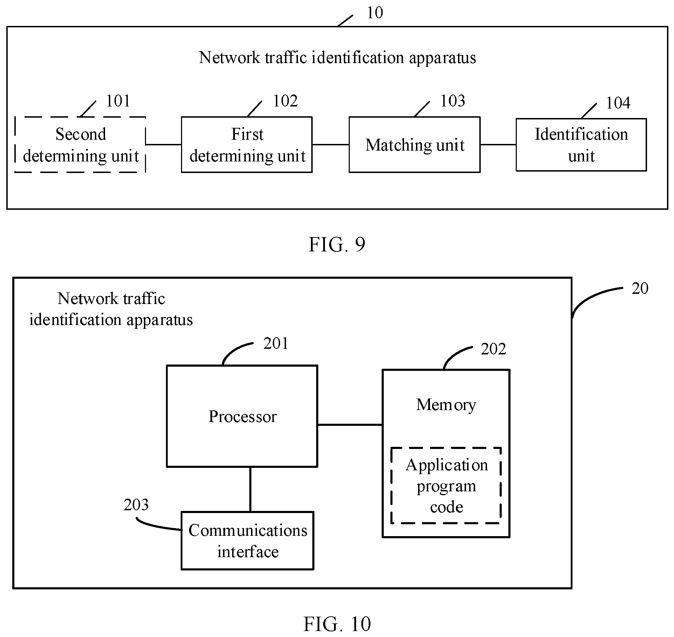

FIG. 9 is a schematic diagram of a structure of a network traffic identification apparatus according to an embodiment of the present invention. The network traffic identification apparatus 10 may include a first determining unit 101, a matching unit 102, and an identification unit 103. Detailed descriptions of the units are as follows.

The first determining unit 102 is configured to determine a transmission mode corresponding to a first network session, where the first network session is a set of data packets with same triplet information in a first time period, the triplet information includes a source address of a client, a destination address of a server, and a transport layer protocol between the client and the server, and the transmission mode includes a behavior pattern of requesting the server by the client and/or a behavior pattern of responding to the client by the server.

The matching unit 103 is configured to determine a feature parameter matching the transmission mode.

The identification unit 104 is configured to determine a type of the first network session based on the feature parameter of the first network session and a preset feature parameter range.

In a possible implementation, the apparatus further includes:
a second determining unit 101, configured to: before the transmission mode corresponding to the first network session is determined, determine a network session that is in network traffic and that includes a preset field as the first network session.

In a possible implementation, the first time period includes a second time period; the transmission mode includes a first transmission mode; the first network session includes a first network flow, where the first network flow is a set of data packets with same quintuple information in the second time period, and the quintuple information includes the source address and a source port of the client, the destination address and a destination port of the server, and the transport layer protocol between the client and the server; and
the first transmission mode includes: in the second time period, the client initiates a request to the server for a plurality of times by using the first network flow, and the server responds to the plurality of times of requests of the client by using the first network flow.

In a possible implementation, the feature parameter includes a first feature parameter of each of the video traffic slices, and the first feature parameter includes at least one of the size of the slice, the average rate of the slice, and the numerical distribution of the size of the network packet in the slice; the preset feature parameter range includes a first video feature parameter range; and
the identification unit 104 is specifically configured to:
slice, in the second time period by using an uplink data packet that is in the first network flow and that is sent by the client to the server as a split point, a downlink data packet that is in the first network flow and that is sent by the server to the client, where a slice does not include the uplink data packet; determine whether the first feature parameter of each slice meets the first video feature parameter range; and if the first feature parameter of each slice meets the first video feature parameter range, determine that the first network session belongs to video traffic.

In a possible implementation, the feature parameter includes a first feature parameter of each of the video traffic slices, and the first feature parameter includes at least one of the size of the slice, the average rate of the slice, and the numerical distribution of the size of the network packet in the slice; the preset feature parameter range includes a first video feature parameter range; and
the identification unit 104 is specifically configured to:
periodically detect, in the second time period, an uplink data packet that is in the first network flow and that is sent by the client to the server; if the uplink data packet satisfies a first preset periodic feature, slice, by using the uplink data packet as a split point, a downlink data packet that is in the first network flow and that is sent by the server to the client, where a slice does not include the uplink data packet; determine whether the first feature parameter of each slice meets the first video feature parameter range; and if the first feature parameter of each slice meets the first video feature parameter range, determine that the first network session belongs to video traffic.

In a possible implementation, the first time period includes a third time period; the transmission mode includes a second transmission mode; the first network session includes a plurality of second network flows, where each second network flow is a set of data packets with same quintuple information in the third time period, and data packets in data packet sets corresponding to different second network flows have same triplet information; and
the second transmission mode includes: in the third time period, the client initiates a request to the server for a plurality of times by using the plurality of second network flows, and the server responds to the requests corresponding to the client by using the plurality of second network flows.

In a possible implementation, the feature parameter includes a second feature parameter of each of the video traffic slices, and the second feature parameter includes at least one of the size of the slice, the average rate of the slice, and the numerical distribution of the size of the network packet in the slice; the preset feature parameter range includes a second video feature parameter range; and
the identification unit 104 is specifically configured to:
slice, in the third time period by using an uplink data packet that is in each of the plurality of second network flows and that is sent by the client to the server as a split point, a downlink data packet that is in the corresponding second network flow and that is sent by the server to the client, where a slice does not include the uplink data packet; determine whether the second feature parameter of each slice of the at least one second network flow meets the second video feature parameter range; and if the second feature parameter of each slice of any one of the at least one second network flow meets the second video feature parameter range, determine that the first network session belongs to video traffic.

In a possible implementation, the feature parameter includes a second feature parameter of each of the video traffic slices, and the second feature parameter includes at least one of the size of the slice, the average rate of the slice, and the numerical distribution of the size of the network packet in the slice; the preset feature parameter range includes a second video feature parameter range; and
the identification unit 104 is specifically configured to:
periodically detect, in the third time period, an uplink data packet that is in each of the plurality of second network flows and that is sent by the client to the server; if the uplink data packet of at least one of the plurality of second network flows satisfies a second preset periodic feature, slice, by using the uplink data packet as a split point, a downlink data packet that is in the corresponding second network flow and that is sent by the server to the client, where a slice does not include the uplink data packet; determine whether the second feature parameter of each slice of the at least one second network flow meets the second video feature parameter range; and if the second feature parameter of each slice of any one of the at least one second network flow meets the second video feature parameter range, determine that the first network session belongs to video traffic.

In a possible implementation, the first time period includes a fourth time period; the transmission mode includes a third transmission mode; the first network session includes a plurality of third network flows, where each third network flow is a set of data packets with same quintuple information in the fourth time period, and data packets in data packet sets corresponding to different third network flows have same triplet information; and
the third transmission mode includes: in the fourth time period, the client initiates one request to the server by using each of the plurality of third network flows, and the server responds to the request corresponding to the client by using each of the plurality of third network flows.

In a possible implementation, the feature parameter includes a third feature parameter of each of the video traffic slices; the third feature parameter includes at least one of a peak rate of the slice, duration of the slice, the size of the slice, the average rate of the slice, and the numerical distribution of the size of the network packet in the slice; the preset feature parameter range includes a third video feature parameter range; and
the identification unit 104 is specifically configured to:
use a downlink data packet that is in each of the plurality of third network flows and that is sent by the server to the client as a slice; determine whether the third feature parameter of each slice meets the third video feature parameter range; and if the third feature parameter of each slice meets the third video feature parameter range, determine that the first network session belongs to video traffic.

In a possible implementation, the first time period includes a fifth time period; the transmission mode includes a fourth transmission mode; the first network session includes a fourth network flow, and the fourth network flow is a set of data packets with same quintuple information in the fifth time period; and
the fourth transmission mode includes: in the fifth time period, the client initiates one request to the server by using the fourth network flow, and the server responds to the request of the client by using the fourth network flow.

In a possible implementation, the feature parameter includes a fourth feature parameter of each of the video traffic slices, and the fourth feature parameter includes at least one of the size of the slice, the average rate of the slice, and the numerical distribution of the size of the network packet in the slice; the preset feature parameter range includes a fourth video feature parameter range; and
the identification unit 104 is specifically configured to:
determine a first data packet in the fourth network flow in the fifth time period, where the first data packet is a data packet whose size is less than that of a second data packet and that is in downlink data packets that are in the fourth network flow and that are sent by the server to the client, and the second data packet is a largest data packet in the fourth network flow; slice the downlink data packets in the fourth network flow by using the first data packet as a split point, where a slice does not include the first data packet; detect whether the fourth feature parameter of each slice meets the fourth video feature parameter range; and if the fourth feature parameter of each slice meets the fourth video feature parameter range, determine that the first network session belongs to video traffic.

In a possible implementation, the feature parameter includes a fourth feature parameter of each of the video traffic slices, and the fourth feature parameter includes at least one of the size of the slice, the average rate of the slice, and the numerical distribution of the size of the network packet in the slice; the preset feature parameter range includes a fourth video feature parameter range; and
the identification unit 104 is specifically configured to:
determine a first data packet in the fourth network flow in the fifth time period, and periodically detect the first data packet, where the first data packet is a data packet whose size is less than that of a second data packet and that is in downlink data packets that are in the fourth network flow and that are sent by the server to the client, and the second data packet is a largest data packet in the fourth network flow;
if the first data packet satisfies a third preset periodic feature, slice the downlink data packets in the fourth network flow by using the first data packet as a split point, where a slice does not include the first data packet; detect whether the fourth feature parameter of each slice meets the fourth video feature parameter range; and if the fourth feature parameter of each slice meets the fourth video feature parameter range, determine that the first network session belongs to video traffic.

It should be noted that, for functions of the functional units in the network traffic identification apparatus 10 described in this embodiment of the present invention, refer to related descriptions of the steps S300 to S303 in the method embodiment described in FIG. 3. Details are not described herein again.

FIG. 10 is a schematic diagram of a structure of another network traffic identification apparatus according to an embodiment of the present invention. The apparatus 20 includes at least one processor 201, at least one memory 202, and at least one communications interface 203. In addition, the device may further include general-purpose components such as an antenna, and details are not described herein.

The processor 201 may be a general-purpose central processing unit (CPU), a microprocessor, an application-specific integrated circuit (application-specific integrated circuit, ASIC), or one or more integrated circuits for controlling program execution of the foregoing solution.

The communications interface 203 is configured to communicate with another device or a communications network such as an Ethernet, a radio access network (RAN), a core network, or a wireless local area network (Wireless Local Area Network, WLAN).

The memory 202 may be a read-only memory (Read-Only Memory, ROM) or another type of static storage device capable of storing static information and instructions, or a random access memory (Random Access Memory, RAM) or another type of dynamic storage device capable of storing information and instructions; or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium capable of carrying or storing expected program code in a form of an instruction or a data structure and capable of being accessed by a computer. However, the memory is not limited thereto. The memory may exist independently, and be connected to the processor by using the bus. The memory may alternatively be integrated with the processor.

The memory 202 is configured to store application program code for executing the foregoing solutions, and the processor 201 controls the execution. The processor 201 is configured to execute the application program code stored in the memory 202.

The code stored in the memory 202 may be used to perform the network traffic identification method provided in FIG. 3, for example, execute the following operations: determining a transmission mode corresponding to a first network session, where the first network session is a set of data packets with same triplet information in a first time period, the triplet information includes a source address of a client, a destination address of a server, and a transport layer protocol between the client and the server, and the transmission mode includes a behavior pattern of requesting the server by the client and/or a behavior pattern of responding to the client by the server; determining a feature parameter matching the transmission mode; and determining a type of the first network session based on the feature parameter of the first network session and a preset feature parameter range.

It should be noted that, for a function of each functional unit of the network traffic identification apparatus 20 described in this embodiment of the present invention, reference may be made to related descriptions of the steps S300 to S303 in the method embodiment shown in FIG. 3. Details are not described herein again.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a magnetic disk, an optical disc, a read-only memory (Read-Only Memory, ROM for short), or a random access memory (Random Access Memory, RAM for short).

## Claims

1. A network traffic identification method comprising:
• determining a transmission mode corresponding to a first network session between a client and a server (S 301), wherein the first network session is a set of data packets with same triplet information in a first time period, the triplet information comprises an IP address of the client, an IP address of the server, and a transport layer protocol of the TCP IP between the client and the server, and the transmission mode comprises a behavior pattern of requesting the server by the client and/or a behavior pattern of responding to the client by the server,
• determining a feature parameter matching the transmission mode (S 302);
• determining a type of the first network session based on the feature parameter of the first network session and a preset feature parameter range (S 303),
wherein:
• the first time period comprises a second time period;
• the server responds by using downlink data packets of downlink data packets of a first network flow after each request with a response for the corresponding request among a plurality of requests;
∘ the feature parameter comprises a first feature parameter of each slice among a first plurality of slices, and the first feature parameter comprises at least one of:
▪ a size of the slice,
▪ an average rate of the slice, and
▪ a numerical distribution of a size of data packets in the slice;
∘ the preset feature parameter range comprises a first video feature parameter range; and
∘ the determining the type of the first network session based on the feature parameter of the first network session and the preset feature parameter range comprises:
▪ slicing, in the second time period by respectively using an uplink data packet of the first network flow as a split point, the downlink data packets of the first network flow, thereby arriving at the first plurality of slices,
wherein no slice in the first plurality of slices contains the uplink data packet; and
▪ if the first feature parameter of each slice in the first plurality of slices meets the first video characteristic parameter range, determining that the first network session belongs to video traffic.

2. The method according to claim 1, wherein the first time period comprises a third time period; the transmission mode comprises a second transmission mode; the first network session comprises a plurality of second network flows, wherein each second network flow is a set of data packets with same quintuple information in the third time period, and data packets in data packet sets corresponding to different second network flows have same triplet information; and
the second transmission mode comprises: in the third time period, the client separately initiates a request to the server for a plurality of times by using the plurality of second network flows, and the server separately responds to requests corresponding to the client by using the plurality of second network flows.

3. The method according to claim 2, wherein the feature parameter comprises a second feature parameter of each of the video traffic slices, and the second feature parameter comprises at least one of the size of the slice, the average rate of the slice, and the numerical distribution of the size of the network packet in the slice; the preset feature parameter range comprises a second video feature parameter range; and
the determining a type of the first network session based on the feature parameter of the first network session and a preset feature parameter range comprises:
slicing, in the third time period by respectively using an uplink data packet that is in the plurality of second network flows and that is sent by the client to the server as a split point, a downlink data packet that is in the corresponding second network flow and that is sent by the server to the client, wherein a slice does not include the uplink data packet; and
if the second feature parameter of each slice of any one of the at least one second network flow meets the second video feature parameter range, determining that the first network session belongs to video traffic.

4. The method according to any one of claims 1 to 3, wherein the first time period comprises a fourth time period; the transmission mode comprises a third transmission mode; the first network session comprises a plurality of third network flows, wherein each third network flow is a set of data packets with same quintuple information in the fourth time period, and data packets in data packet sets corresponding to different third network flows have same triplet information; and
the third transmission mode comprises: in the fourth time period, the client initiates one request to the server by using each of the plurality of third network flows, and the server separately responds to the request corresponding to the client by using the plurality of third network flows.

5. The method according to claim 4, wherein the feature parameter comprises a third feature parameter of each of the video traffic slices, and the third feature parameter comprises at least one of a peak rate of the slice, duration of the slice, the size of the slice, the average rate of the slice, and the numerical distribution of the size of the network packet in the slice; the preset feature parameter range comprises a third video feature parameter range; and
the determining a type of the first network session based on the feature parameter of the first network session and a preset feature parameter range comprises:
using a downlink data packet that is in each of the plurality of third network flows and that is sent by the server to the client as a slice; and
if the third feature parameter of each slice meets the third video feature parameter range, determining that the first network session belongs to video traffic.

6. The method according to any one of claims 1 to 5, wherein the first time period comprises a fifth time period; the transmission mode comprises a fourth transmission mode; the first network session comprises a fourth network flow, wherein the fourth network flow is a set of data packets with same quintuple information in the fifth time period; and
the fourth transmission mode comprises: in the fifth time period, the client initiates one request to the server by using the fourth network flow, and the server responds to the request of the client by using the fourth network flow.

7. The method according to claim 6, wherein the feature parameter comprises a fourth feature parameter of each of the video traffic slices, and the fourth feature parameter comprises at least one of the size of the slice, the average rate of the slice, and the numerical distribution of the size of the network packet in the slice; the preset feature parameter range comprises a fourth video feature parameter range; and
the determining a type of the first network session based on the feature parameter of the first network session and a preset feature parameter range comprises:
determining a first data packet in the fourth network flow in the fifth time period, wherein the first data packet is a data packet whose size is less than that of a second data packet and that is in downlink data packets that are in the fourth network flow and that are sent by the server to the client, and the second data packet is a largest data packet in the fourth network flow;
slicing the downlink data packets in the fourth network flow by using the first data packet as a split point, wherein a slice does not include the first data packet;
detecting whether the fourth feature parameter of each slice meets the fourth video feature parameter range; and
if the fourth feature parameter of each slice meets the fourth video feature parameter range, determining that the first network session belongs to video traffic.

8. A network traffic identification apparatus configured to perform the method according to any one of claims 1 to 7.

9. A computer storage medium, wherein the computer storage medium stores instructions, and when the instructions are executed by a computer, the computer is enabled to perform the method according to any one of claims 1 to 7.

10. A computer program product, wherein the computer program product stores instructions, and when the instructions are executed by a computer, the computer is enabled to perform the method according to any one of claims 1 to 7.

## Patentansprüche

1. Netzwerkverkehrsidentifikationsverfahren, umfassend:
• Bestimmen eines Übertragungsmodus entsprechend einer ersten Netzwerksitzung zwischen einem Client und einem Server (S 301), wobei die erste Netzwerksitzung ein Satz von Datenpaketen mit denselben Triplett-Informationen in einer ersten Zeitperiode ist, die Triplett-Informationen eine IP-Adresse des Clients, eine IP-Adresse des Servers und ein Transportschichtprotokoll des TCP IP zwischen dem Client und dem Server umfassen, und der Übertragungsmodus ein Verhaltensmuster zum Anfordern des Servers durch den Client und/oder ein Verhaltensmuster zum Antworten durch den Server auf den Client umfasst,
• Bestimmen eines Merkmalsparameters, der zu dem Übertragungsmodus (S 302) passt;
• Bestimmen eines Typs der ersten Netzwerksitzung basierend auf dem Merkmalsparameter der ersten Netzwerksitzung und einem voreingestellten Merkmalsparameterbereich (S 303),
wobei:
• die erste Zeitperiode eine zweite Zeitperiode umfasst;
• der Server unter Verwendung der Downlink-Datenpakete eines ersten Netzwerkflusses nach jeder Anfrage mit einer Antwort auf die entsprechende Anfrage aus einer Vielzahl von Anfragen antwortet;
∘ der Merkmalsparameter einen ersten Merkmalsparameter jedes Slice unter einer ersten Vielzahl von Slices umfasst, und der erste Merkmalsparameter mindestens eines der folgenden Elemente umfasst:
▪ eine Größe des Slice,
▪ eine durchschnittliche Rate des Slice und
▪ eine numerische Verteilung der Größe von Datenpaketen in dem Slice;
∘ der voreingestellte Merkmalsparameterbereich einen ersten Videomerkmalsparameterbereich umfasst; und
∘ das Bestimmen des Typs der ersten Netzwerksitzung basierend auf dem Merkmalsparameter der ersten Netzwerksitzung und dem voreingestellten Merkmalsparameterbereich Folgendes umfasst:
▪ Slicen der Downlink-Datenpakete des ersten Netzwerkflusses in der zweiten Zeitperiode unter jeweiliger Verwendung eines Uplink-Datenpakets des ersten Netzwerkflusses als Teilungspunkt, wodurch die erste Vielzahl von Slices erreicht wird,
wobei kein Slice in der ersten Vielzahl von Slices das Uplink-Datenpaket enthält; und
▪ wenn der erste Merkmalsparameter jedes Slice in der ersten Vielzahl von Slices den ersten Video-Charakteristikparameterbereich erfüllt, Bestimmen, dass die erste Netzwerksitzung zu dem Videoverkehr gehört.

2. Verfahren nach Anspruch 1, wobei die erste Zeitperiode eine dritte Zeitperiode umfasst; der Übertragungsmodus einen zweiten Übertragungsmodus umfasst; die erste Netzwerksitzung eine Vielzahl von zweiten Netzwerkflüssen umfasst, wobei jeder zweite Netzwerkfluss ein Satz von Datenpaketen mit denselben Quintupel-Informationen in der dritten Zeitperiode ist und Datenpakete in Datenpaketsätzen entsprechend verschiedenen zweiten Netzwerkflüssen dieselben Triplett-Informationen aufweisen; und der zweite Übertragungsmodus Folgendes umfasst: in der dritten Zeitperiode initiiert der Client separat eine Anfrage an den Server für eine Vielzahl von Malen unter Verwendung der Vielzahl von zweiten Netzwerkflüssen, und der Server antwortet separat auf Anfragen entsprechend dem Client unter Verwendung der Vielzahl von zweiten Netzwerkflüssen.

3. Verfahren nach Anspruch 2, wobei der Merkmalsparameter einen zweiten Merkmalsparameter jeder der Videoverkehrs-Slices umfasst, und der zweite Merkmalsparameter mindestens eines von der Größe des Slice, der Durchschnittsrate des Slice und der numerischen Verteilung der Größe des Netzwerkpakets in dem Slice umfasst; der voreingestellte Merkmalsparameterbereich einen zweiten Videomerkmalsparameterbereich umfasst; und
das Bestimmen eines Typs der ersten Netzwerksitzung basierend auf dem Merkmalsparameter der ersten Netzwerksitzung und einem voreingestellten Merkmalsparameterbereich Folgendes umfasst:
Slicen eines Downlink-Datenpakets, das in dem entsprechenden zweiten Netzwerkfluss liegt und das durch den Server an den Client gesendet wird, in der dritten Zeitperiode unter jeweiliger Verwendung eines Uplink-Datenpakets, das in der Vielzahl von zweiten Netzwerkflüssen liegt und das durch den Client als Teilungspunkt an den Server gesendet wird, wobei ein Slice nicht das Uplink-Datenpaket beinhaltet; und
wenn der zweite Merkmalsparameter jedes Slice eines beliebigen des mindestens einen zweiten Netzwerkflusses den zweiten Videomerkmalsparameterbereich erfüllt, Bestimmen, dass die erste Netzwerksitzung zu dem Videoverkehr gehört.

4. Verfahren nach einem der Ansprüche 1 bis 3, wobei die erste Zeitperiode eine vierte Zeitperiode umfasst; der Übertragungsmodus einen dritten Übertragungsmodus umfasst; die erste Netzwerksitzung eine Vielzahl von dritten Netzwerkflüssen umfasst, wobei jeder dritte Netzwerkfluss ein Satz von Datenpaketen mit denselben Quintupel-Informationen in der vierten Zeitperiode ist und Datenpakete in Datenpaketsätzen entsprechend verschiedenen dritten Netzwerkflüssen dieselben Triplett-Informationen aufweisen; und
der dritte Übertragungsmodus Folgendes umfasst: in der vierten Zeitperiode initiiert der Client eine Anfrage an den Server unter Verwendung jedes der Vielzahl von dritten Netzwerkflüssen, und der Server antwortet separat auf die Anfrage entsprechend dem Client unter Verwendung der Vielzahl von dritten Netzwerkflüssen.

5. Verfahren nach Anspruch 4, wobei der Merkmalsparameter einen dritten Merkmalsparameter jeder der Videoverkehrs-Slices umfasst, und der dritte Merkmalsparameter mindestens eines von einer Spitzenrate des Slice, Dauer des Slice, der Größe des Slice, der Durchschnittsrate des Slice und der numerischen Verteilung der Größe des Netzwerkpakets in dem Slice umfasst; der voreingestellte Merkmalsparameterbereich einen dritten Videomerkmalsparameterbereich umfasst; und
das Bestimmen eines Typs der ersten Netzwerksitzung basierend auf dem Merkmalsparameter der ersten Netzwerksitzung und einem voreingestellten Merkmalsparameterbereich Folgendes umfasst:
Verwenden eines Downlink-Datenpakets, das in jedem der Vielzahl von dritten Netzwerkflüssen liegt und das durch den Server als Slice an den Client gesendet wird; und
wenn der dritte Merkmalsparameter jedes Slice den dritten Videomerkmalsparameterbereich erfüllt, Bestimmen, dass die erste Netzwerksitzung zu dem Videoverkehr gehört.

6. Verfahren nach einem der Ansprüche 1 bis 5, wobei die erste Zeitperiode eine fünfte Zeitperiode umfasst; der Übertragungsmodus einen vierten Übertragungsmodus umfasst; die erste Netzwerksitzung einen vierten Netzwerkfluss umfasst, wobei der vierte Netzwerkfluss ein Satz von Datenpaketen mit denselben Quintupel-Informationen in der fünften Zeitperiode ist; und
der vierte Übertragungsmodus Folgendes umfasst: in der fünften Zeitperiode initiiert der Client eine Anfrage an den Server unter Verwendung des vierten Netzwerkflusses, und der Server antwortet auf die Anfrage des Clients unter Verwendung des vierten Netzwerkflusses.

7. Verfahren nach Anspruch 6, wobei der Merkmalsparameter einen vierten Merkmalsparameter jeder der Videoverkehrs-Slices umfasst, und der vierte Merkmalsparameter mindestens eines von der Größe des Slice, der Durchschnittsrate des Slice und der numerischen Verteilung der Größe des Netzwerkpakets in dem Slice umfasst; der voreingestellte Merkmalsparameterbereich einen vierten Videomerkmalsparameterbereich umfasst; und
das Bestimmen eines Typs der ersten Netzwerksitzung basierend auf dem Merkmalsparameter der ersten Netzwerksitzung und einem voreingestellten Merkmalsparameterbereich Folgendes umfasst:
Bestimmen eines ersten Datenpakets in dem vierten Netzwerkfluss in der fünften Zeitperiode, wobei das erste Datenpaket ein Datenpaket ist, dessen Größe kleiner als jene eines zweiten Datenpakets ist und das in Downlink-Datenpaketen liegt, die in dem vierten Netzwerkfluss liegen und die durch den Server an den Client gesendet werden, und das zweite Datenpaket ein größtes Datenpaket in dem vierten Netzwerkfluss ist;
Slicen der Downlink-Datenpakete in dem vierten Netzwerkfluss unter Verwendung des ersten Datenpakets als Teilungspunkt, wobei ein Slice nicht das erste Datenpaket beinhaltet;
Erkennen, ob der vierte Merkmalsparameter jedes Slice den vierten Videomerkmalsparameterbereich erfüllt; und
wenn der vierte Merkmalsparameter jedes Slice den vierten Videomerkmalsparameterbereich erfüllt, Bestimmen, dass die erste Netzwerksitzung zu dem Videoverkehr gehört.

8. Netzwerkverkehrsidentifikationsvorrichtung, die dazu konfiguriert ist, das Verfahren nach einem der Ansprüche 1 bis 7 durchzuführen.

9. Computerspeichermedium, wobei das Computerspeichermedium Anweisungen speichert und, wenn die Anweisungen durch einen Computer ausgeführt werden, der Computer in die Lage versetzt wird, das Verfahren nach einem der Ansprüche 1 bis 7 durchzuführen.

10. Computerprogrammprodukt, wobei das Computerprogrammprodukt Anweisungen speichert und, wenn die Anweisungen durch einen Computer ausgeführt werden, der Computer in die Lage versetzt wird, das Verfahren nach einem der Ansprüche 1 bis 7 durchzuführen.

## Revendications

1. Procédé d'identification de trafic de réseau comprenant :
• la détermination d'un mode de transmission correspondant à une première session réseau entre un client et un serveur (S 301), dans lequel la première session réseau est un ensemble de paquets de données contenant les mêmes informations triplets dans une première période, les informations triplets comprennent une adresse IP du client, une adresse IP du serveur et un protocole de couche transport du TCP/IP entre le client et le serveur, et le mode de transmission comprend un modèle de comportement de requête au serveur par le client et/ou un modèle de comportement de réponse au client par le serveur,
• la détermination d'un paramètre de caractéristique correspondant au mode de transmission (S 302) ;
• la détermination d'un type de la première session réseau sur la base du paramètre de caractéristique de la première session réseau et d'une plage de paramètres de caractéristique prédéfinie (S 303),
dans lequel :
• la première période comprend une deuxième période ;
• le serveur répond en utilisant des paquets de données de liaison descendante de paquets de données de liaison descendante d'un premier flux réseau après chaque requête avec une réponse pour la requête correspondante parmi une pluralité de requêtes ;
∘ le paramètre de caractéristique comprend un premier paramètre de caractéristique de chaque tranche parmi une première pluralité de tranches, et le premier paramètre de caractéristique comprend au moins un des éléments suivants :
▪ une taille de la tranche,
▪ un débit moyen de la tranche, et
▪ une distribution numérique d'une taille de paquets de données dans la tranche ;
∘ la plage de paramètres de caractéristique prédéfinie comprend une première plage de paramètres de caractéristique vidéo ; et
∘ la détermination du type de la première session réseau sur la base du paramètre de caractéristique de la première session réseau et de la plage de paramètres de caractéristique prédéfinie comprend :
▪ le découpage, dans la deuxième période, en utilisant respectivement un paquet de données de liaison montante du premier flux réseau comme point de division, des paquets de données de liaison descendante du premier flux réseau, aboutissant ainsi à la première pluralité de tranches,
dans lequel aucune tranche de la première pluralité de tranches ne contient le paquet de données de liaison montante ; et
▪ si le premier paramètre de caractéristique de chaque tranche dans la première pluralité de tranches répond à la première plage de paramètres de caractéristique vidéo, le fait de déterminer que la première session réseau appartient au trafic vidéo.

2. Procédé selon la revendication 1, dans lequel la première période comprend une troisième période ; le mode de transmission comprend un deuxième mode de transmission ; la première session réseau comprend une pluralité de deuxièmes flux réseau, dans lequel chaque deuxième flux réseau est un ensemble de paquets de données contenant les mêmes informations quintuples dans la troisième période, et des paquets de données des ensembles de paquets de données correspondant à différents deuxièmes flux réseau contenant les mêmes informations triplets ; et
le deuxième mode de transmission comprend : dans la troisième période, le client initie séparément une requête au serveur à plusieurs reprises en utilisant la pluralité de deuxièmes flux réseau, et le serveur répond séparément aux requêtes correspondant au client en utilisant la pluralité de deuxièmes flux réseau.

3. Procédé selon la revendication 2, dans lequel le paramètre de caractéristique comprend un deuxième paramètre de caractéristique pour chacune des tranches de trafic vidéo, et le deuxième paramètre de caractéristique comprend au moins un des éléments suivants : la taille de la tranche, le débit moyen de la tranche et la distribution numérique de la taille du paquet réseau dans la tranche ; la plage de paramètres de caractéristique prédéfinie comprend une deuxième plage de paramètres de caractéristique vidéo ; et
la détermination d'un type de la première session réseau sur la base du paramètre de caractéristique de la première session réseau et d'une plage de paramètres de caractéristique prédéfinie comprend :
le découpage, dans la troisième période, en utilisant respectivement un paquet de données de liaison montante appartenant à la pluralité de deuxièmes flux réseau et envoyé par le client au serveur comme point de division, d'un paquet de données de liaison descendante appartenant au deuxième flux réseau correspondant et envoyé par le serveur au client, dans lequel une tranche ne comporte pas le paquet de données de liaison montante ; et
si le deuxième paramètre de caractéristique de chaque tranche de l'un quelconque de l'au moins un deuxième flux réseau répond à la deuxième plage de paramètres de caractéristique vidéo, le fait de déterminer que la première session réseau appartient au trafic vidéo.

4. Procédé selon l'une quelconque des revendications 1 à 3, dans lequel la première période comprend une quatrième période ; le mode de transmission comprend un troisième mode de transmission ; la première session réseau comprend une pluralité de troisièmes flux réseau, dans lequel chaque troisième flux réseau est un ensemble de paquets de données contenant les mêmes informations quintuples dans la quatrième période, et des paquets de données des ensembles de paquets de données correspondant à différents troisièmes flux réseau contenant les mêmes informations triplets ; et
le troisième mode de transmission comprend : dans la quatrième période, le client initie une requête au serveur en utilisant chacun de la pluralité de troisièmes flux réseau, et le serveur répond séparément à la requête correspondant au client en utilisant la pluralité de troisièmes flux réseau.

5. Procédé selon la revendication 4, dans lequel le paramètre de caractéristique comprend un troisième paramètre de caractéristique pour chacune des tranches de trafic vidéo, et le troisième paramètre de caractéristique comprend au moins un des éléments suivants : un débit de pointe de la tranche, une durée de la tranche, la taille de la tranche, le débit moyen de la tranche et la distribution numérique de la taille du paquet réseau dans la tranche ; la plage de paramètres de caractéristique prédéfinie comprend une troisième plage de paramètres de caractéristique vidéo ; et
la détermination d'un type de la première session réseau sur la base du paramètre de caractéristique de la première session réseau et d'une plage de paramètres de caractéristique prédéfinie comprend :
en utilisant un paquet de données de liaison descendante qui se trouve dans chacun de la pluralité de troisièmes flux réseau et qui est envoyé par le serveur au client sous forme de tranche ; et
si le troisième paramètre de caractéristique de chaque tranche répond à la troisième plage de paramètres de caractéristique vidéo, le fait de déterminer que la première session réseau appartient au trafic vidéo.

6. Procédé selon l'une quelconque des revendications 1 à 5, dans lequel la première période comprend une cinquième période ; le mode de transmission comprend un quatrième mode de transmission ; la première session réseau comprend un quatrième flux réseau, dans lequel le quatrième flux réseau est un ensemble de paquets de données contenant les mêmes informations quintuples dans la cinquième période ; et
le quatrième mode de transmission comprend : dans la cinquième période, le client initie une requête au serveur en utilisant le quatrième flux réseau, et le serveur répond à la requête du client en utilisant le quatrième flux réseau.

7. Procédé selon la revendication 6, dans lequel le paramètre de caractéristique comprend un quatrième paramètre de caractéristique pour chacune des tranches de trafic vidéo, et le quatrième paramètre de caractéristique comprend au moins un des éléments suivants : la taille de la tranche, le débit moyen de la tranche et la distribution numérique de la taille du paquet réseau dans la tranche ; la plage de paramètres de caractéristique prédéfinie comprend une quatrième plage de paramètres de caractéristique vidéo ; et
la détermination d'un type de la première session réseau sur la base du paramètre de caractéristique de la première session réseau et d'une plage de paramètres de caractéristique prédéfinie comprend :
la détermination d'un premier paquet de données dans le quatrième flux réseau dans la cinquième période, dans lequel le premier paquet de données est un paquet de données dont la taille est inférieure à celle d'un second paquet de données et qui se trouve dans les paquets de données de liaison descendante qui se trouvent dans le quatrième flux réseau et qui sont envoyés par le serveur au client, et le second paquet de données est le plus grand paquet de données dans le quatrième flux réseau ;
le découpage des paquets de données de liaison descendante dans le quatrième flux réseau en utilisant le premier paquet de données comme point de division, dans lequel une tranche ne comporte pas le premier paquet de données ;
le fait de détecter si le quatrième paramètre de caractéristique de chaque tranche répond à la quatrième plage de paramètres caractéristique vidéo ; et
si le quatrième paramètre de caractéristique de chaque tranche répond à la quatrième plage de paramètres de caractéristique vidéo, le fait de déterminer que la première session réseau appartient au trafic vidéo.

8. Appareil d'identification de trafic de réseau configuré pour réaliser le procédé selon l'une quelconque des revendications 1 à 7.

9. Support de stockage informatique, dans lequel le support de stockage informatique stocke des instructions, et lorsque les instructions sont exécutées par un ordinateur, l'ordinateur est activé pour réaliser le procédé selon l'une quelconque des revendications 1 à 7.

10. Produit de programme informatique, dans lequel le produit de programme informatique stocke des instructions, et lorsque les instructions sont exécutées par un ordinateur, l'ordinateur est activé pour réaliser le procédé selon l'une quelconque des revendications 1 à 7.
